# EUROPEAN PATENT SPECIFICATION

(11) **EP 1 984 705 B1**
(45) Date of publication and mention of the grant of the patent: **01.11.2017**
(21) Application number: 07763177.8
(22) Date of filing: 07.02.2007
(51) Int. Cl.: G01F 11/00, B67D 1/00, B67D 3/00, B67D 1/04, B67D 1/06, B67D 1/08, G01F 13/00

(54) **METHOD AND APPRATUS FOR LIQUID DISPENSING HEAD AND SYSTEM**
VERFAHREN UND VORRICHTUNG FÜR EINEN FLÜSSIGKEITSAUSSTOSSKOPF UND SYSTEM
PROCEDE ET APPAREIL POUR TETE DE DISTRIBUTION DE LIQUIDE ET SYSTEME

(30) Priority: 07.02.2006 US 765904 P; 06.02.2007 US 703282
(43) Date of publication of application: 29.10.2008
(73) Proprietor: NAPA TECHNOLOGY, Santa Clara CA 95054 (US)
(72) Inventor: TARADALSKY, Morris, San Jose, CA 95120 (US); RITTIMAN, Ross, San Jose, California 95120 (US); VETTER, Edward, A., Santa Clara, California 95051 (US); GALLANT, Benjamin, M., Berkeley, California 94705 (US)
(74) Representative: Käck, Stefan
(86) International application number: PCT/US2007/003144
(87) International publication number: WO 2007/092443

(56) References cited:
- EP-A1- 1 352 873
- WO-A1-2005/113417
- DE-A1- 3 630 650
- US-A- 4 702 396
- US-A- 4 932 561
- US-A- 5 139 179
- US-A1- 2003 098 320
- US-A1- 2005 098 225
- US-A1- 2005 184 084

## Description

### FIELD OF THE INVENTION

The present invention pertains to a dispensing head and a dispensing system. More particularly, the present invention relates to a method and apparatus for a liquid dispensing head and system.

### BACKGROUND OF THE INVENTION

Dispensing of liquids that may be consumed by humans has the potential for contamination. This presents a problem.

Dispensing of liquids, such as wine, which may be costly, may be prone to error in the volume dispensed. This presents a problem.

Different methods and systems for dispensing an amount of liquid from a bottle are known in the art.

For example, European Patent Application Publication No. EP 1 352 873 A1 discloses an apparatus for the automatic drawing out of beverages from bottles wherein the bottles are kept in their normal vertical position. The apparatus comprises a drawing tap equipped with an electric valve. In the body of the drawing tap suitable channels are present which allow entry of an inert pushing gas, the drawing of the liquid and the cleaning of the drawing tap after the drawing.

U.S. Patent Application Publication No. US 2003/0098320 A1 describes an apparatus for preserving and dispensing wine or champagne. In particular, a stopper for the apparatus is disclosed. The stopper is used to seal the bottle, enables a nitrogen rich gas to enter the bottle and enables the wine or champagne to move from the bottle to a dispenser.

U.S. Patent No. 4,702,396 also relates to the field of storing and dispensing wine. In particular, an apparatus for perserving and dispensing wine is disclosed.

Both U.S. Patent No. 5,139,179 and German Patent Application Publication No. DE 3630650 A1 disclose a liquid dispensing apparatus. A gas from a gas dispenser unit flows through a dispenser spout component into a bottle. The gas flow into the bottle causes a flow of liquid up a flow tube, out a pouring spout and into a glass.

U.S. Patent 4,932,561 relates to an apparatus designed to dispense pre-mixed beverages directly from bottles or other containers in which these beverages are commonly available. The apparatus delays or prevents the dissolution of carbonation from the beverage by automatically injecting compressed air into the head space above the beverage within the bottle.

### SUMMARY OF THE INVENTION

The invention is defined in claims 1, 6, and 7, respectively. Particular embodiments are set out in the dependent claims.

In particular, a method of dispensing an amount of liquid from a bottle is disclosed. The method comprises the steps of: mounting a dispensing head on the bottle, said dispensing head having a pour spout, a valve assembly, and a gas intake, wherein said pour spout faces outward from said dispensing head; moving said dispensing head into contact with a dispensing system such that the gas intake on said dispensing head is in fluid communication with a gas line on said dispensing system and such that the valve assembly of said dispensing head is engaged with a motor of the dispensing system; receiving, at said dispensing system, information relating to the amount of liquid to be dispensed; rotating said valve assembly of said dispensing head by said motor such that said valve assembly selectively allows flow from an inert gas source through said gas intake allowing inert gas flow into said bottle such that liquid in said bottle is forced into said pour spout or allows inert gas flow from said gas intake and out said pour spout to provide a puff purge of said pour spout or allows an initial air purge of the initial air that is present in a bottle when it is first opened; starting an injection of an inert gas into the bottle having the liquid; stopping said injection when said amount of liquid to be dispensed has exited said bottle through the pour spout; and removing the bottle from the dispensing system, wherein said dispensing head is retained on the bottle and prevents air from entering the bottle.

Further, a dispense head for dispensing an amount of liquid from a bottle is disclosed. The dispense head is configured to be mounted and retained on the bottle to prevent air from entering the bottle. The dispense head is removable from a liquid dispensing system. It comprises: a cap assembly configured to be secured to the bottle; a gas intake; a pour spout facing outward from said dispense head; and a valve assembly mounted on said cap assembly and in fluid communication with said gas intake and pour spout, said valve assembly being engageable with a motor of the dispensing system and being rotatable by the motor, said valve assembly configured to selectively allow flow from an inert gas source through said gas intake and said cap assembly allowing inert gas flow into said bottle such that liquid in said bottle is forced into said pour spout or to allow inert gas flow from said gas intake and out said pour spout to provide a puff purge of said pour spout or to allow an initial air purge of the initial air that is present in a bottle when it is first opened.

An apparatus for dispensing an amount of liquid from a bottle is also disclosed. The apparatus comprises: the dispense head described above; at least one stall; an inert gas source; a gas supply port within said at least one stall; a motor positioned at said stall to engage the valve assembly of said dispensing head; and a computer configured to control said motor to selectively rotate the valve assembly, said valve assembly configured to selectively allow flow from the inert gas source through said gas intake and said cap assembly allowing inert gas flow into said bottle such that liquid in said bottle is forced into said pour spout or to allow inert gas flow from said gas intake and out said pour spout to provide a puff purge of said pour spout or to allow an initial air purge of the initial air that is present in a bottle when it is first opened.

### BRIEF DESCRIPTION OF THE DRAWINGS

The invention is illustrated by way of example and not limitation in the figures of the accompanying drawings in which:

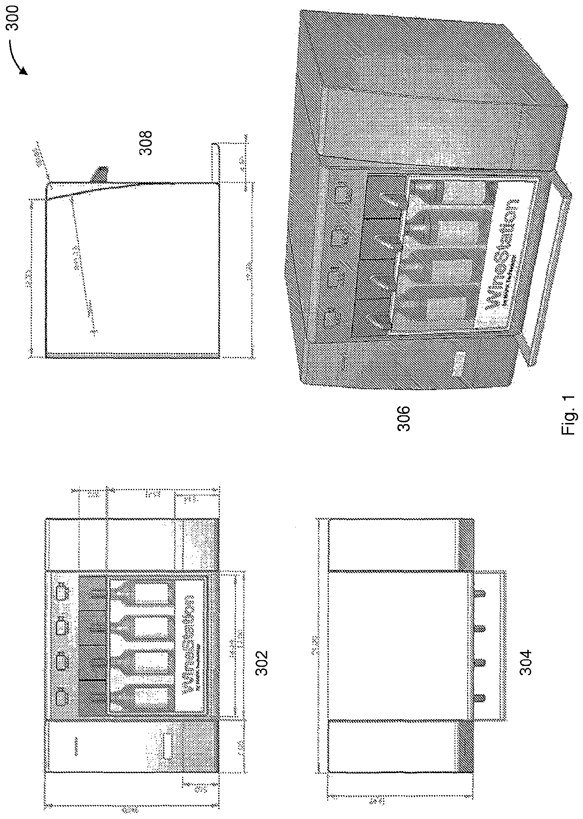

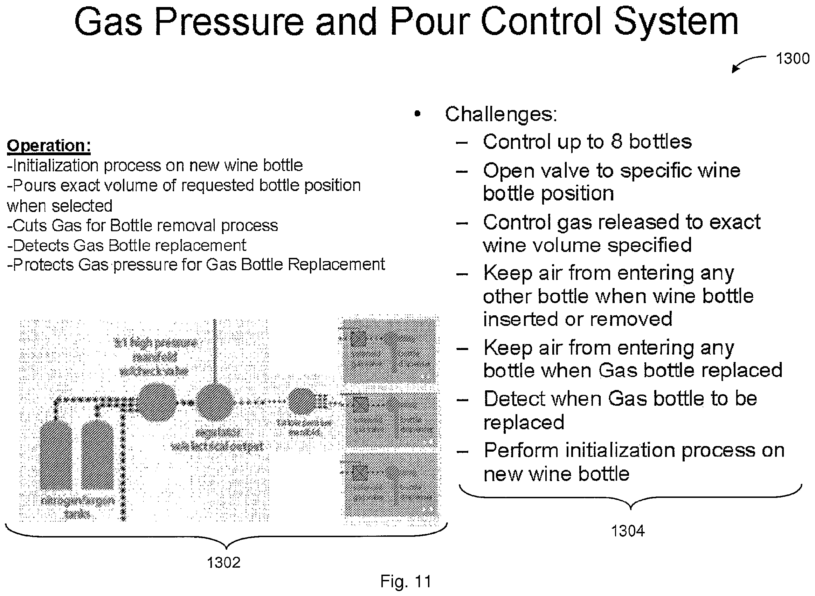

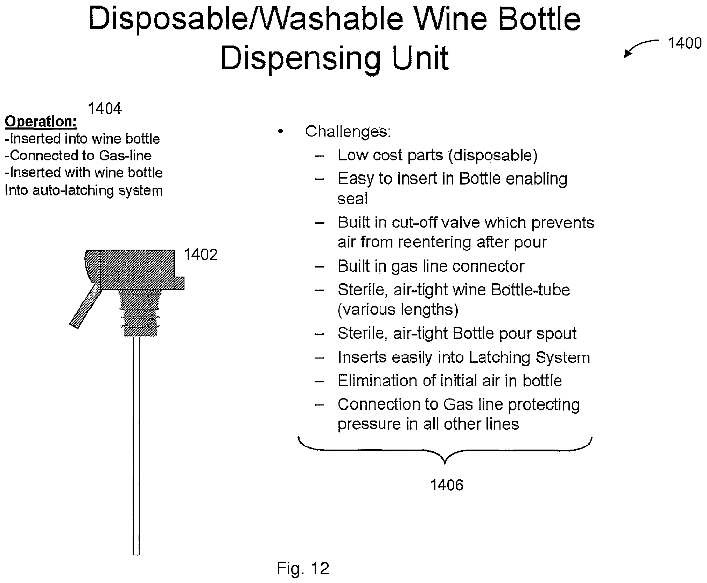

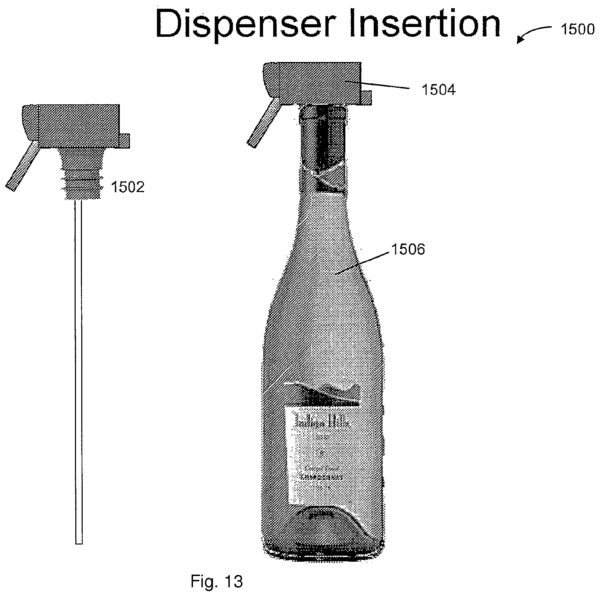

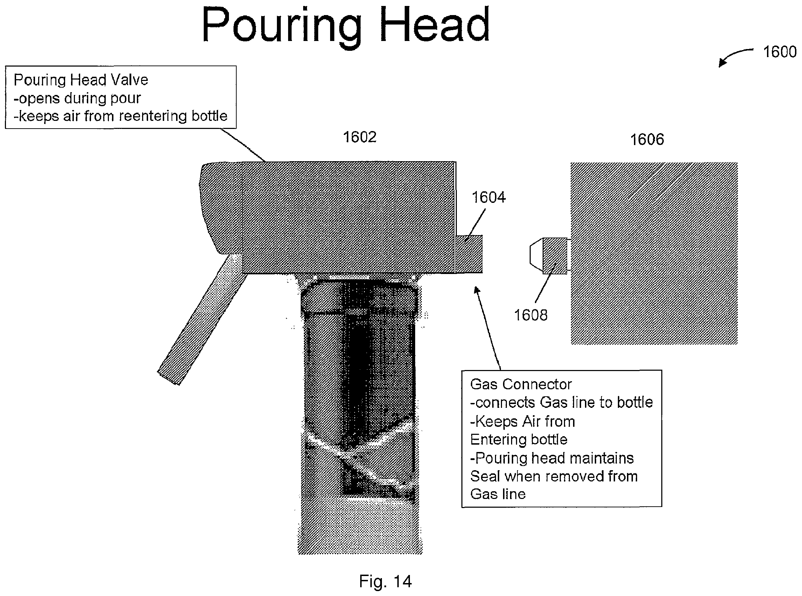

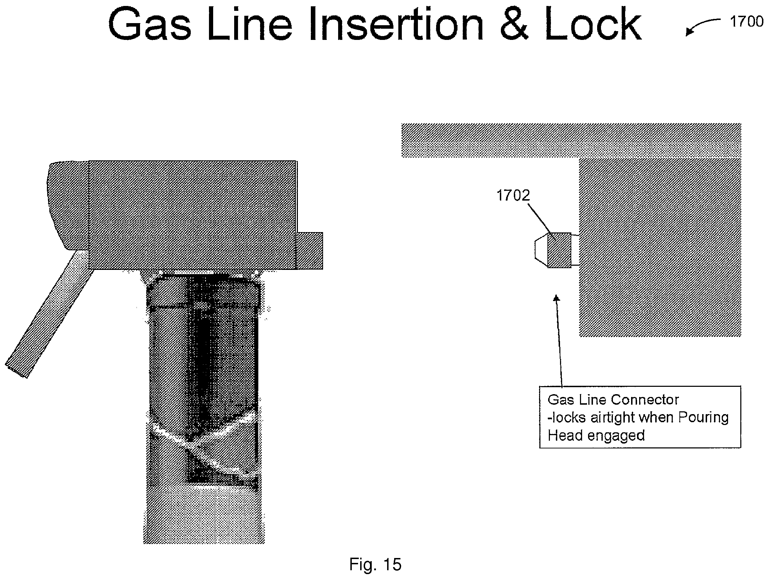

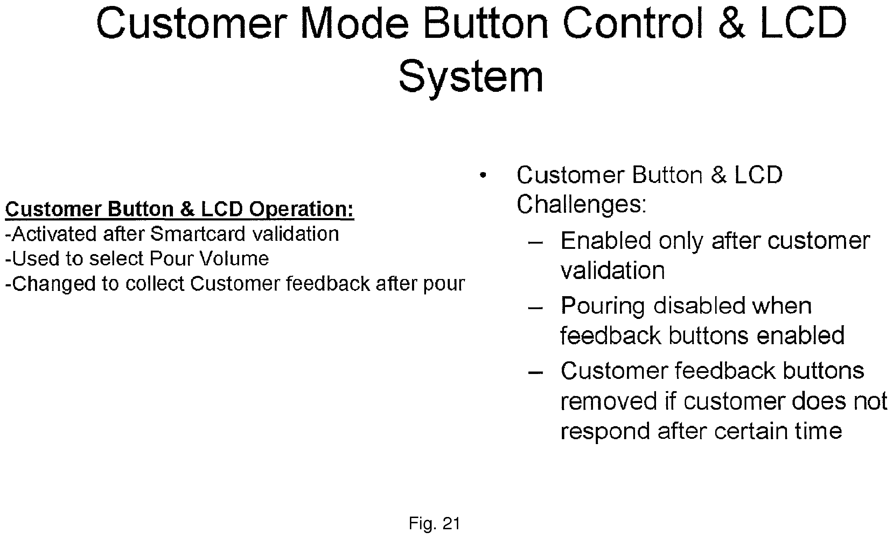

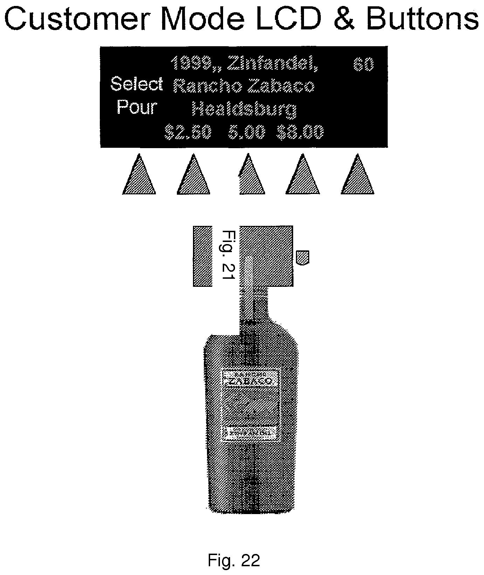

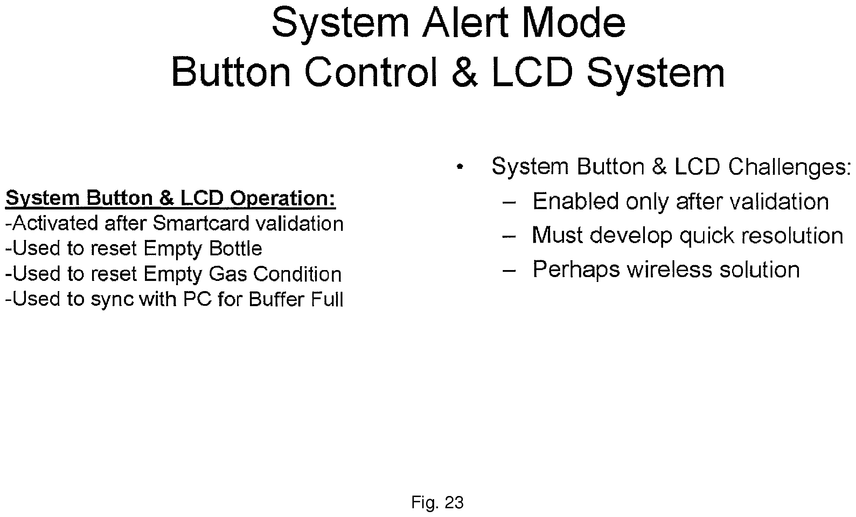

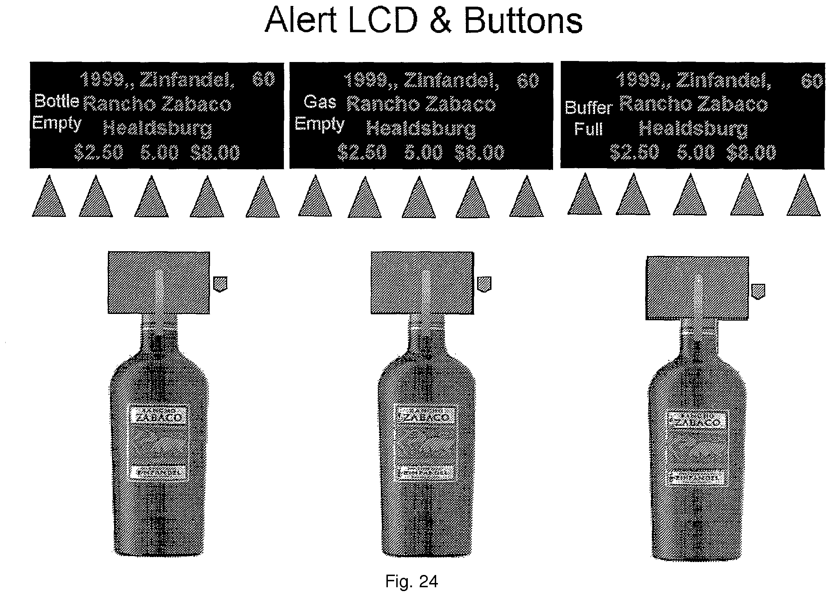

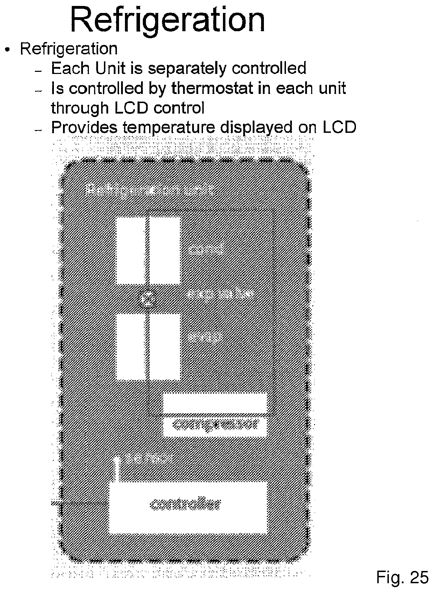

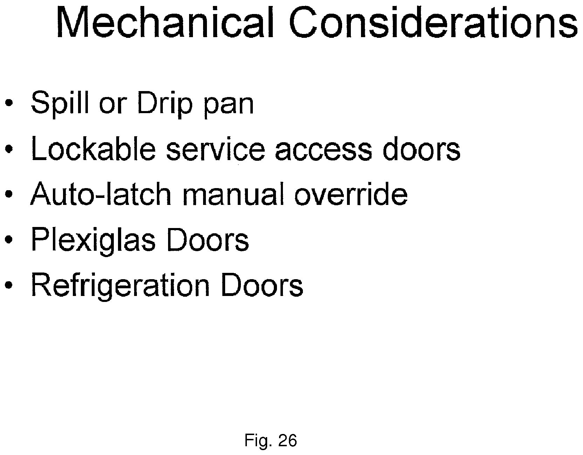

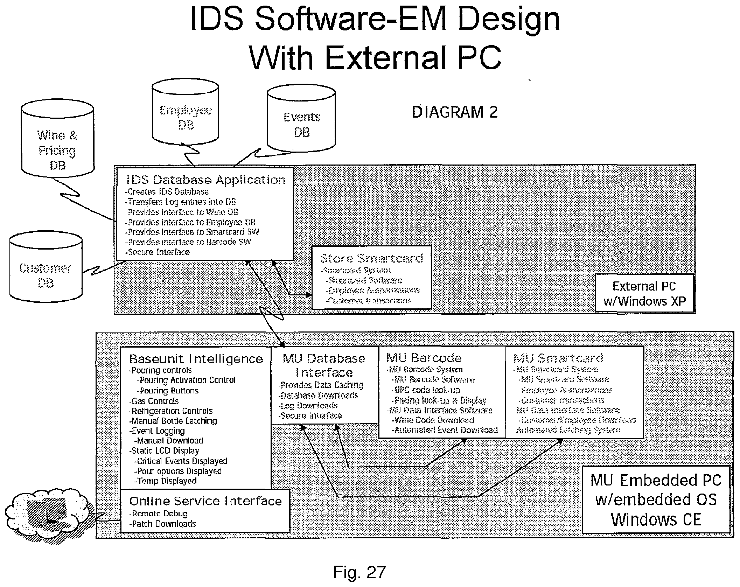

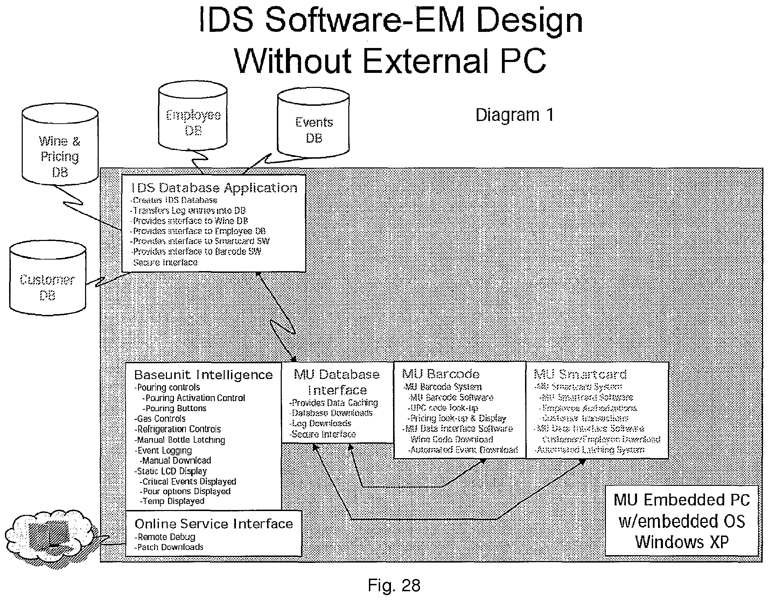

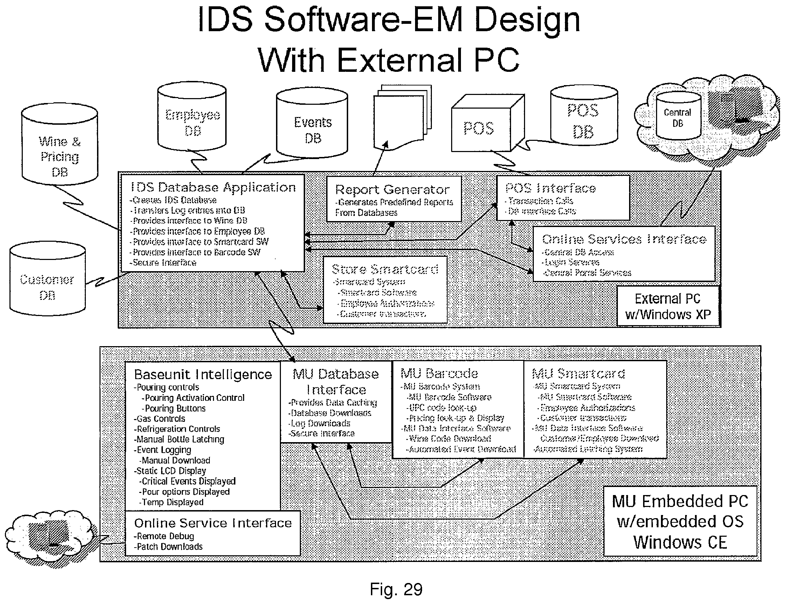

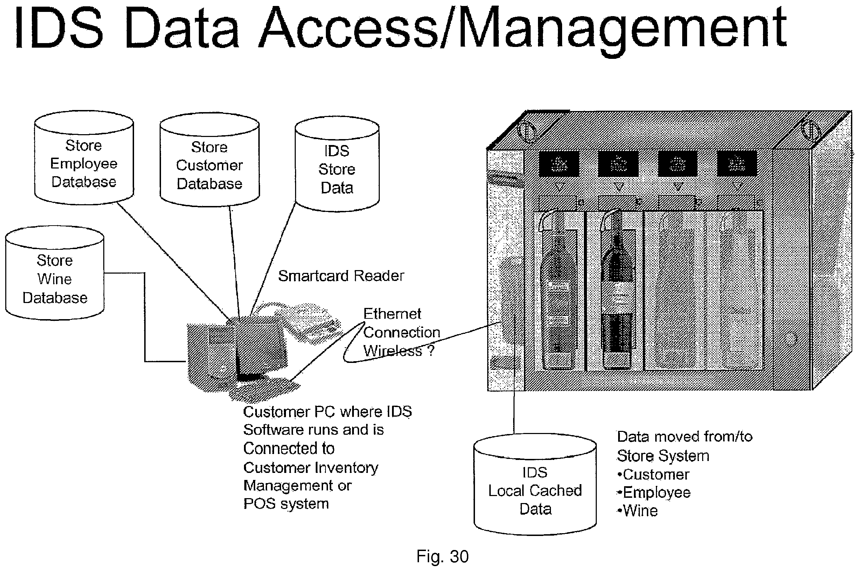

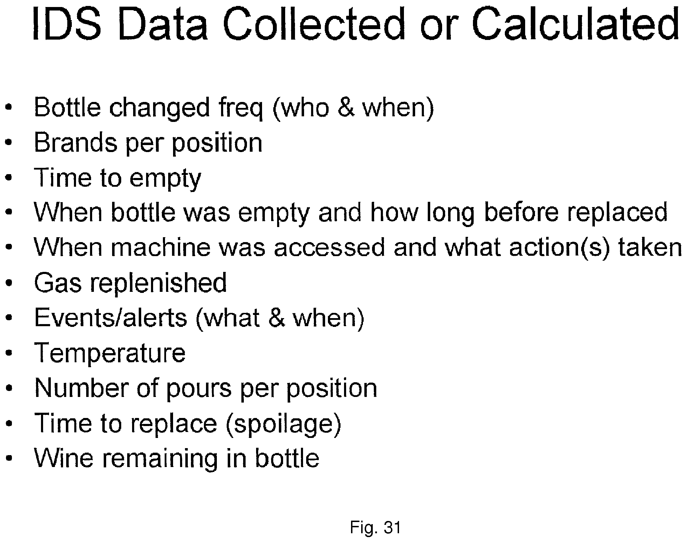

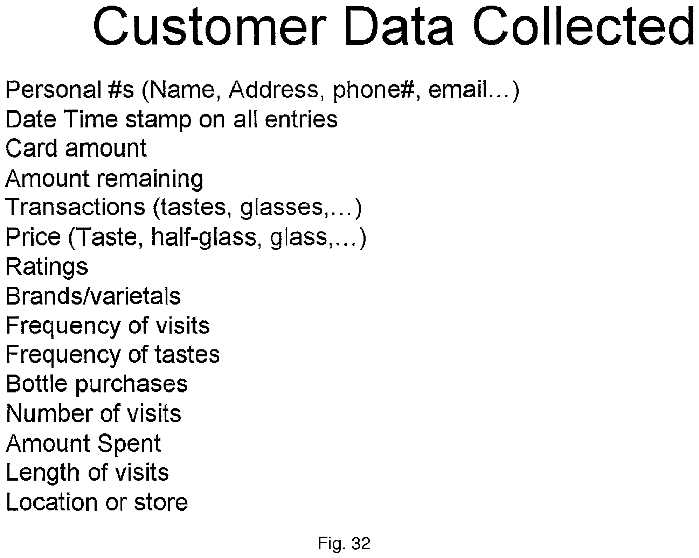

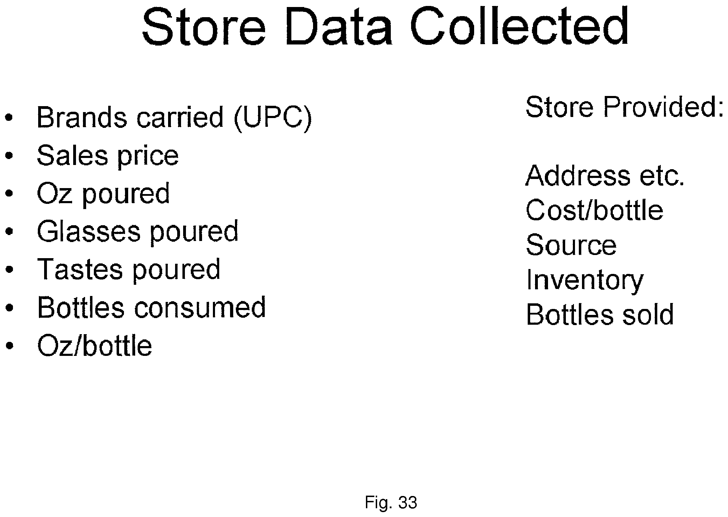

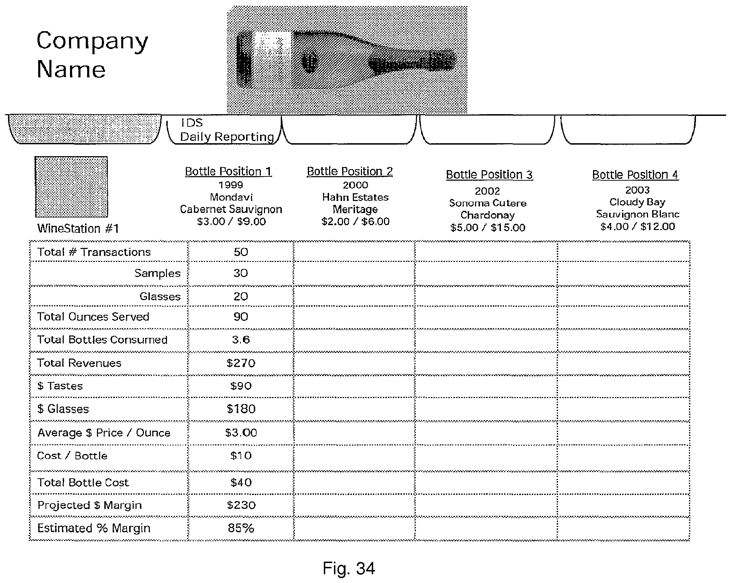

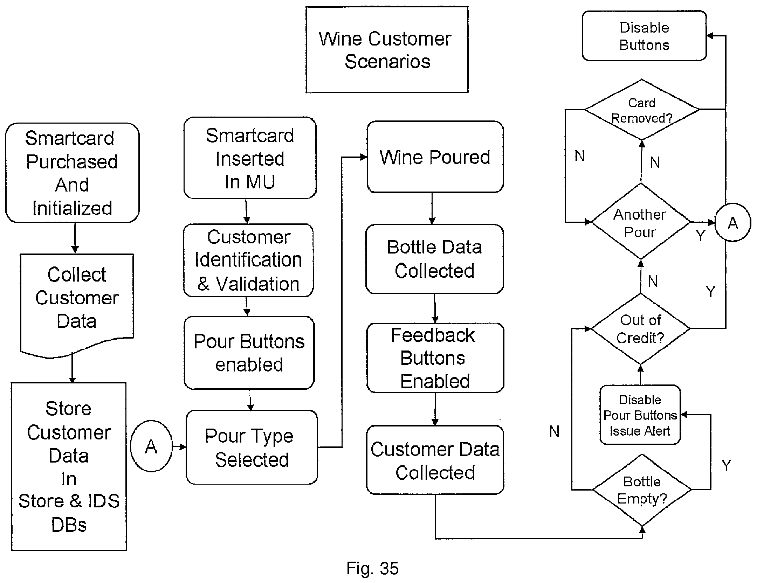

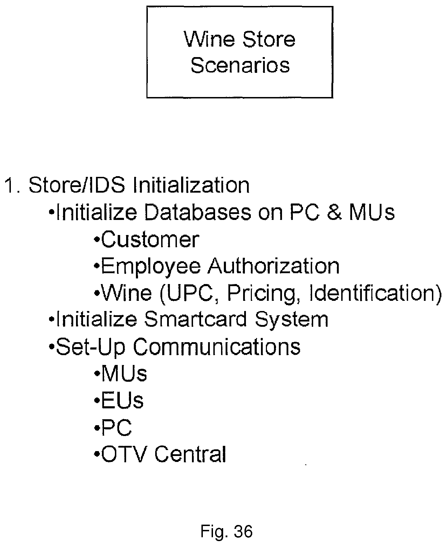

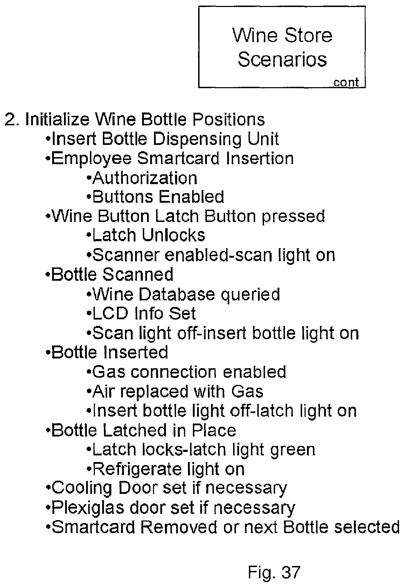

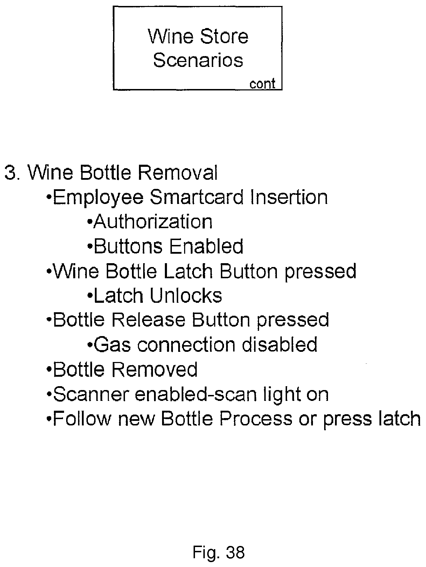

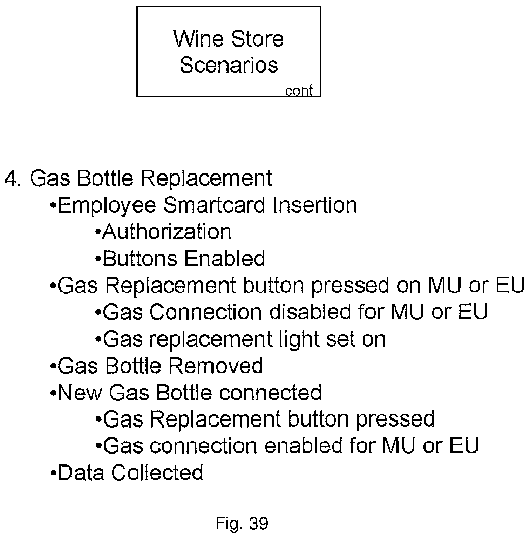

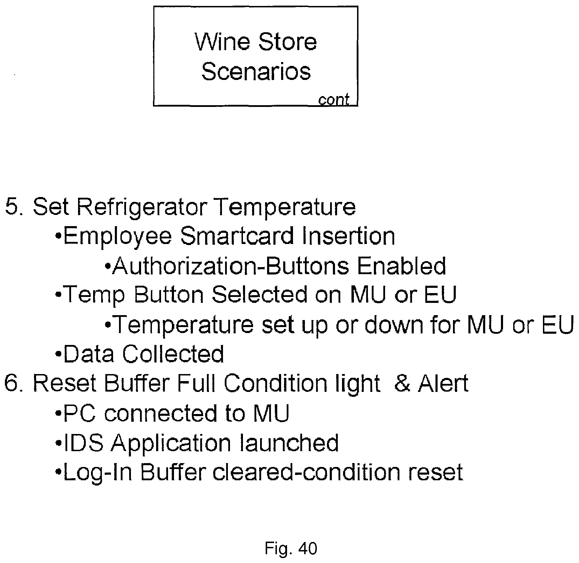

Figures 1-66 illustrate various embodiments of the invention.

### DETAILED DESCRIPTION

Figure 1 illustrates, generally at 300, one embodiment of the invention denoted as WineStation showing several views. A front view 302, a top view 304, a perspective front view 306, and a left side view 308 are shown. In one embodiment the liquid may be wine, however, the invention is not so limited and may be used to dispense any liquid (e.g. seltzer, water, apple juice, orange juice, juices, etc.).

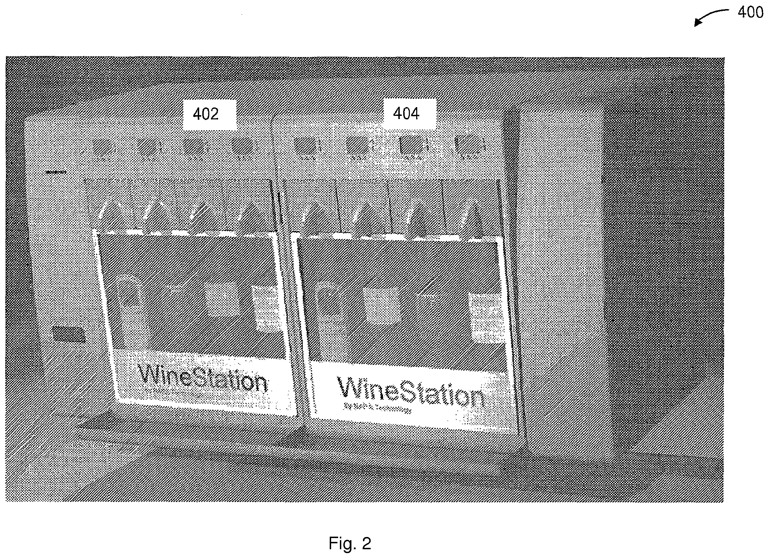

Figure 2 illustrates, generally at 400, one embodiment of the invention having two stations 402 and 404 connected next to each other. In this way the WineStation may be expanded in capability.

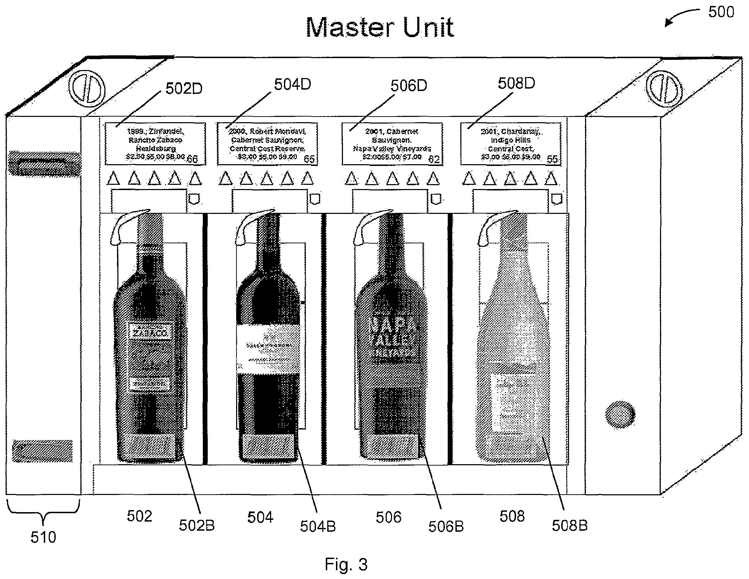

Figure 3 illustrates, generally at 500, one embodiment of the invention called a master unit. As shown, there are four pouring stalls (502, 504, 506, 508) with bottles (502B, 504B, 506B, 508B) and above them four displays (502D, 504D, 506D, 508D) respectively. On the left side is a unit 510 capable of accepting payments (such as, but not limited to, credit cards, debit cards, smart cards, cash, etc.).

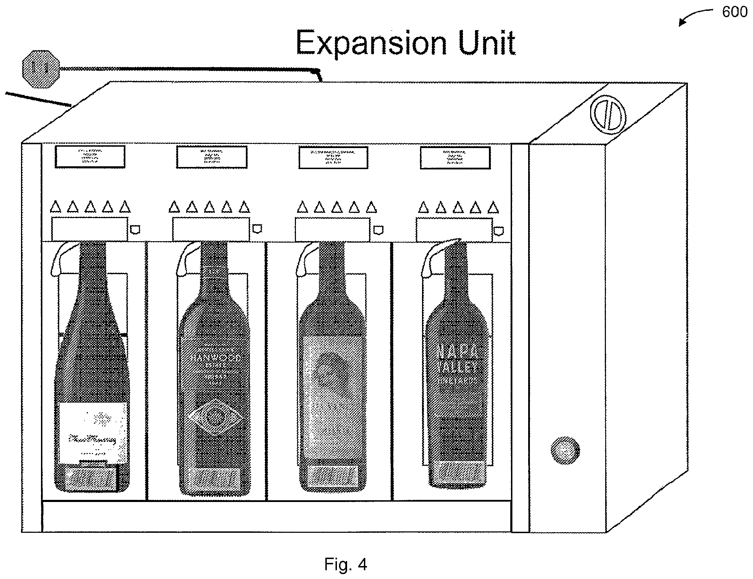

Figure 4 illustrates, generally at 600, one embodiment of the invention showing an expansion unit.

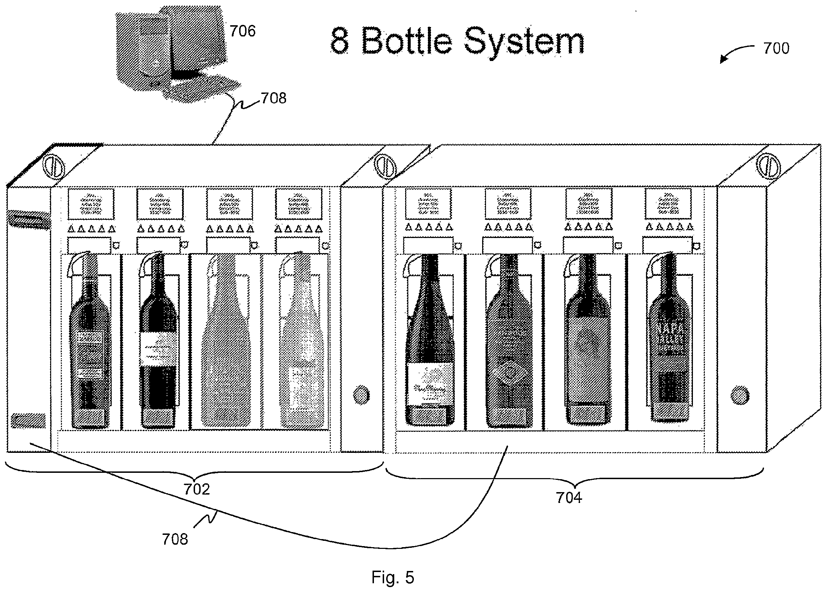

Figure 5 illustrates, generally at 700, one embodiment of the invention showing an eight bottle system composed of a four unit master 702 coupled to a four unit expansion unit 704. More units may be combined to form, for example, two eight bottle systems, a sixteen bottle system, or any N (integer) bottle system. Also shown is a computer system 706 in communication via 708 with the eight bottle system.

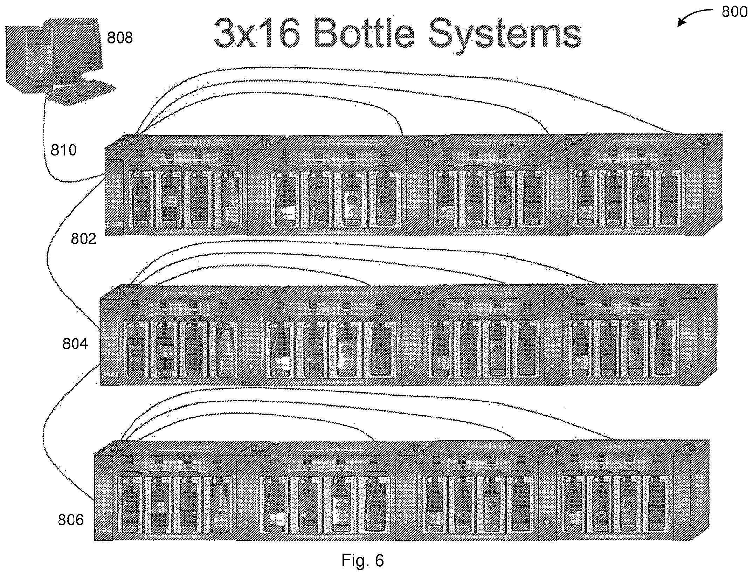

Figure 6 illustrates, generally at 800, one embodiment of the invention showing a 3x16 bottle system. (3x being 802, 804, 806 with each 1x having 4 stations of 4 bottles (16 total) each.) Also shown is a computer system 808 in communication via 810 with the 3x16 bottle system.

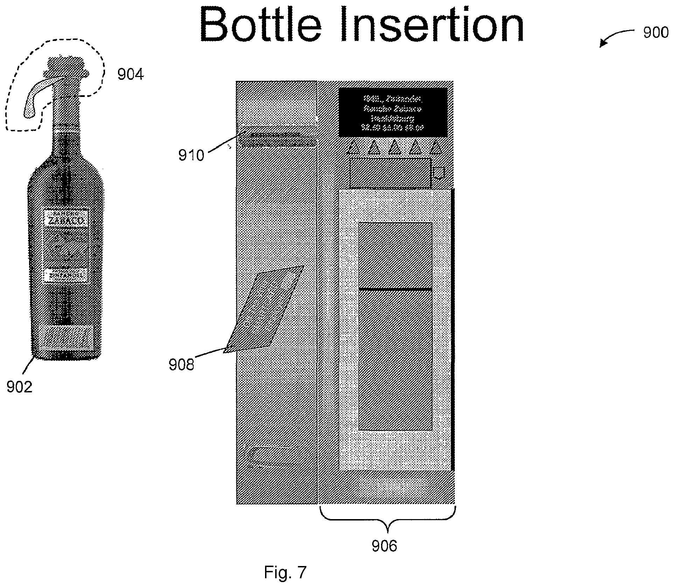

Figure 7 illustrates, generally at 900, one embodiment of the invention showing bottle insertion. Shown is a bottle 902, with a pouring spout attached 904, a single station for illustration of insertion 906, and a smart card 908, that is inserted at 910 to allow insertion of the bottle by an authorized person.

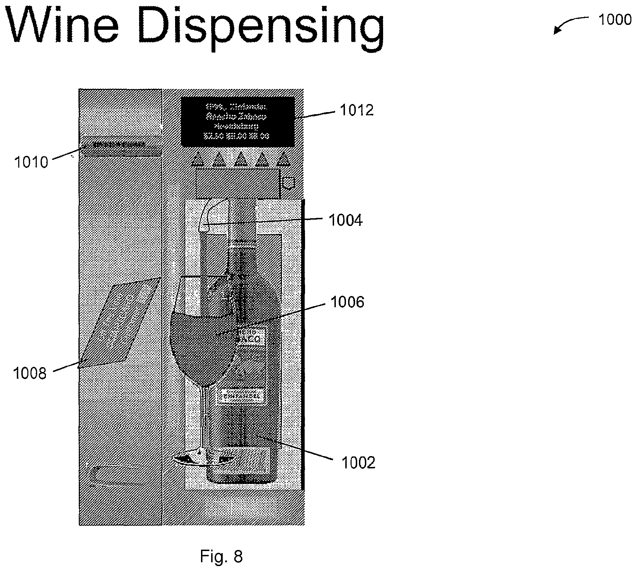

Figure 8 illustrates, generally at 1000, one embodiment of the invention showing liquid dispensing, in this particular case the liquid is a wine. At 1002 is the bottle, at 1004 the pouring spout, at 1006 the wine glass, at 1008 a smart card, 1010 a smart card slot, and at 1012 information about the contents of the bottle 1002, such as, but not limited to price per pour, vintage, age, name of liquid, vineyard, year, etc.

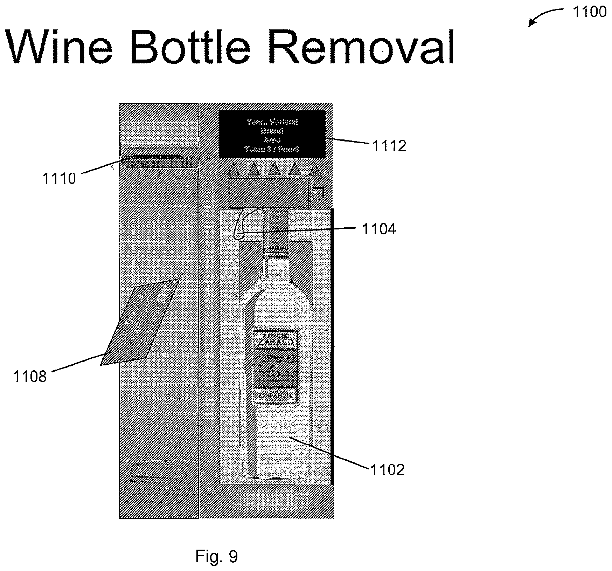

Figure 9 illustrates, generally at 1100, one embodiment of the invention showing bottle removal.. At 1102 is the bottle, at 1104 the pouring spout, at 1108 a smart card, 1110 a smart card slot, and at 1112 information about the contents of the bottle 1102. The smartcard 1108 allows only those authorized to remove a bottle. At 1112 information about the history of the bottle 1102, such as, but not limited to number of pours, time installed, temperature range experienced, total revenue generated, time period of most pours, etc.

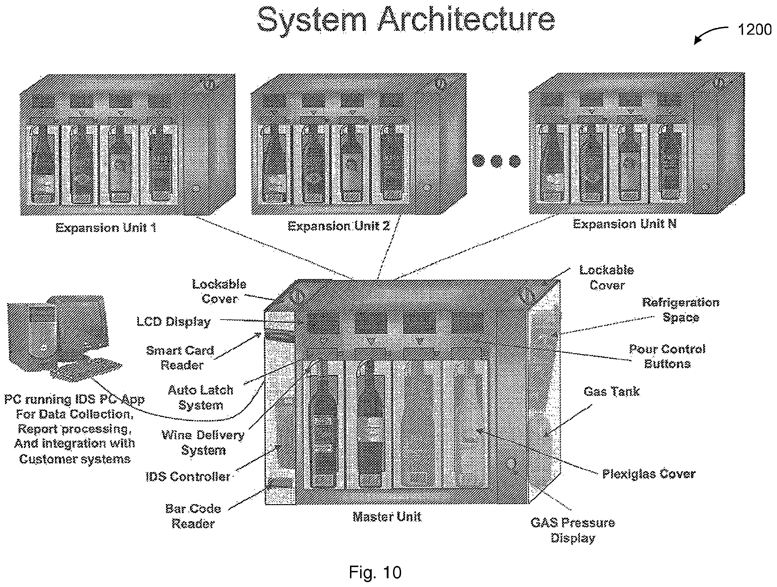

Figure 10 illustrates, generally at 1200, one embodiment of the invention showing a system architecture.

In one embodiment the present invention may be an intelligent dispensing system. Such a system may have features, such as, but not limited to: a Pour Control System - Automated and adjustable Wine Pouring using an Inert Gas; Wine Preservation System - Manages and automates N2 or Ar distribution; Disposable or Washable wine delivery system - Sterile tubing & stopper - Creates vacuum prior to gas injection - Only part that makes contact with Wine; a Smartcard Access & Control System - Provides functional controls & validates customer & operator access - Customer Feedback tracking; Wine Identification System-Provides Wine Bottle Barcode identification against Store or central UPC database; Auto-latching Wine Bottle Security System - Provides control over wine bottle insertion and removal; Attention Required Alert System - Detects Bottle empty condition, gas empty condition, temperature alert, system attention required; Data Collection Manager- IDS Customer Database-tracks all customer info-IDS Store Database-tracks all employee & location related info-IDS System Database-tracks all events and system interactions; Master Unit Communications Manager -Detects, manages, and aggregates data across multiple Master Units - Provides Store PC and IDS central system access and synchronization; IDS Application-Runs on Customer PC - Provides synchronization with IDS Master Units - Provides Store Reporting functions - Provides Interface to supported POS systems - Provides access to Central IDS system our Internet, etc.

In one embodiment of the invention a master unit may have an embedded controller and/or microprocessor for controlling the following features and functions:
- Controls Wine Dispensing
   - Smartcard Processing
   - Pour Buttons
   - Controls Latches
   - Gas Control
- Controls Wine Bottle Functions
   - Insertion Process
      - Authorization
      - Barcode Info
      - LCD and Button displays & functions
   - Removal Process
      - Authorization
- Collects All Actions & Alerts
   - Stores all data in local Database in Non-volatile Storage
- Controls Scanning Function
- Controls Smartcard Functions
- Identifies, connects, and controls EUs attached (Gas bottles & refrigeration)
- Connects and communicates to other MUs and passes data through as required
- Connects and communicates to IDS PC App
- Power distribution to components and connected EUs

In one embodiment of the invention an expansion unit may have many of the features of a master unit. For example, an LCD Display, LCD Controls, Bottle Insertion & Seal Function, Pour Control Function, Independent Gas Tank, and Refrigeration. The expansion unit may also be slaved or in communication with the Master Unit having data passed through communication links.

Figure 11 illustrates, generally at 1300, one embodiment of the invention showing a gas pressure and pour control system 1302 as well as its capabilities 1304.

Figure 12 illustrates, generally at 1400, one embodiment of the invention showing a dispensing head also called a dispensing unit and pouring head 1402, its operation 1404, and capabilities 1406.

Figure 13 illustrates, generally at 1500, one embodiment of the invention showing a dispensing head 1502 and after being inserted 1504 into a bottle 1506.

Figure 14 illustrates, generally at 1600, one embodiment of the invention showing more details of a pouring head 1602, showing a gas connector 1604 which may be connected to a gas source 1606 through a connection 1608.

Figure 15 illustrates, generally at 1700, one embodiment of the invention showing more details of a pouring head gas line 1702 insertion and lock.

In one embodiment of the invention, an auto latching system for the pouring head insures a proper seal with the bottle, can secure the bottle, and may require a smartcard authorization to unlock the bottle. This feature may be on a bottle by bottle basis with, for example, bottled water not having any locks, whereas a bottle of 1937 Glenfiddich under extreme lock control.

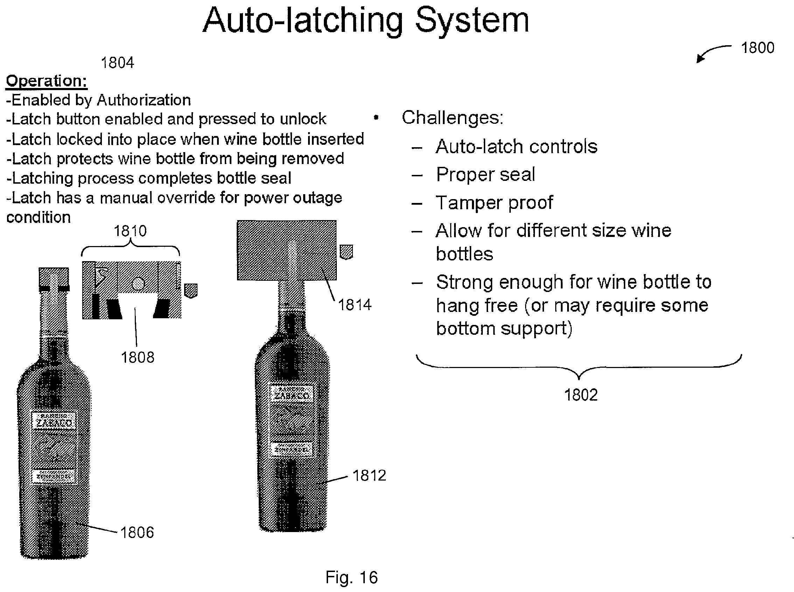

Figure 16 illustrates, generally at 1800, one embodiment of the invention showing more details of an auto-latching system showing capabilities 1802, operation 1804, a bottle 1806 ready to be inserted into a docking position 1808 of a bay 1810, and at 1812 the bottle inserted and the latch 1814 in place securing the bottle 1812 from removal.

In one embodiment of the invention, a barcode system may be used to among other things, automate liquid information entry (for example, bottled water v. whiskey, wine, etc.), access prices for the bottles from a database, display relevant information on the LCD above the bottle, interface with a database (such as a wine database to obtain ratings, suggested accompaniments, etc.

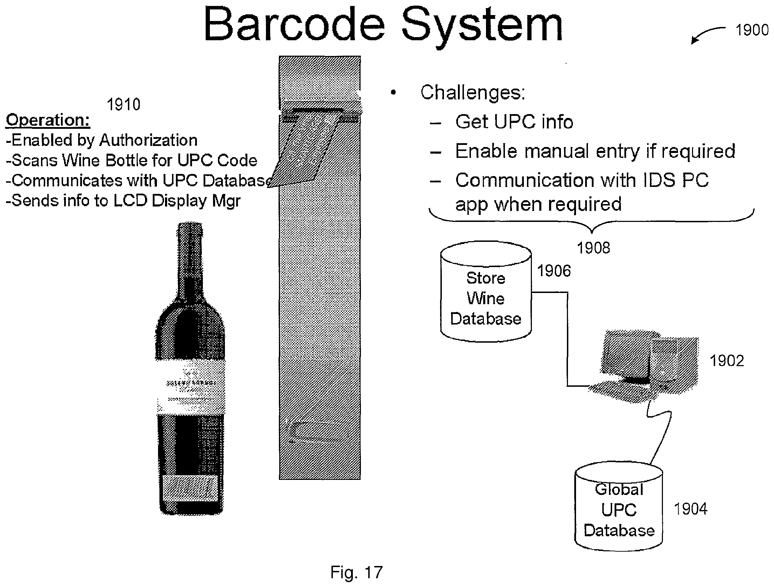

Figure 17 illustrates, generally at 1900, one embodiment of the invention showing more details of a barcode system, with a computer system 1902, in communication with a global UPC database 1904 and a store wine database 1906. The system has capabilities 1908, and operation 1910.

In one embodiment of the invention, a smartcard or equivalent type system (RFID, etc.) may provide security for the latching system, provides security for LCD functions, provides security for system functions, unlocks the pouring system, tracks customer debit or credit, interfaces with customer info database, etc. Different cards may be given to different customers, etc.

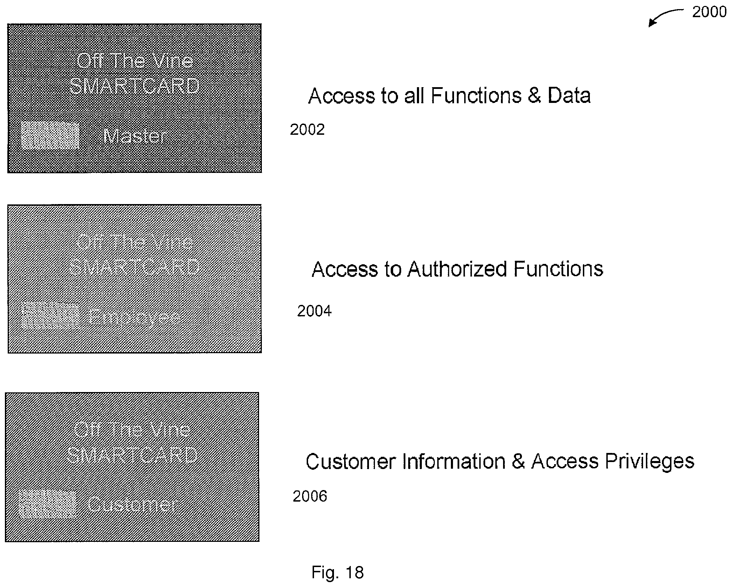

Figure 18 illustrates, generally at 2000, one embodiment of the invention showing different types of cards granting different access rights (2002, 2004, 2006).

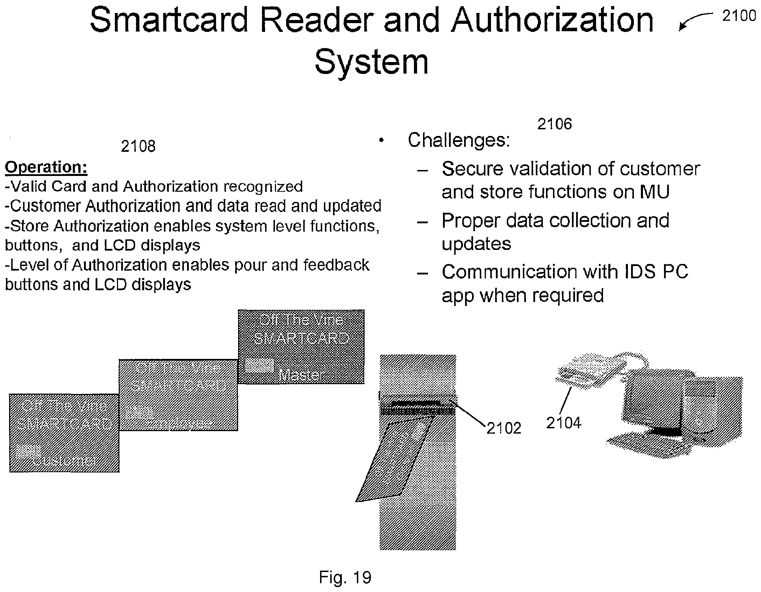

Figure 19 illustrates, generally at 2100, one embodiment of the invention showing a Smartcard Reader 2102 on the system dispensing system and 2104 on the Authorization System. The capabilities are listed at 2106 and operation at 2108.

In one embodiment of the present invention, LCD panels with display and input are located above each bottle. The LCD Display may show such information as Price per pour, Wine Info, Compartment Temperature, Customer Ratings, Alert Conditions, etc.

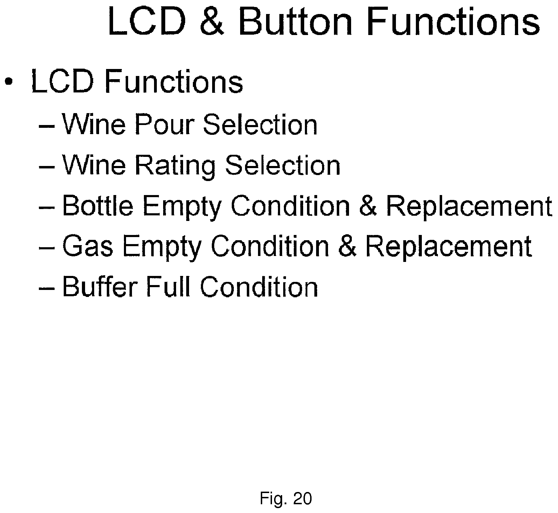

Figures 20-40, illustrate various embodiments of the present invention.

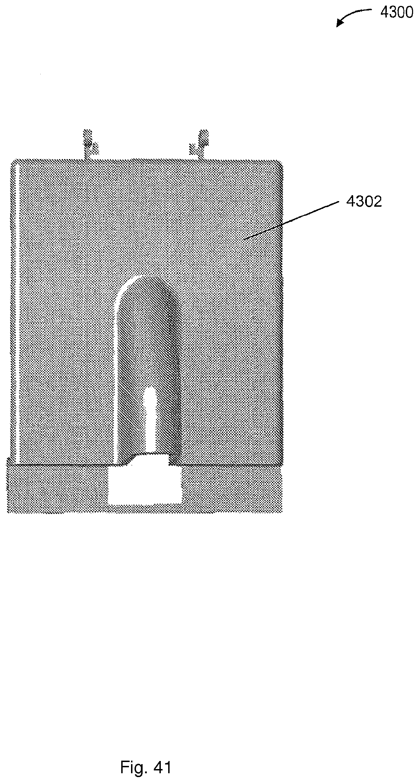

Figure 41 illustrates, generally at 4300, one embodiment of the invention showing the front view of a bay door 4302 which is used to cover the dispensing head spout.

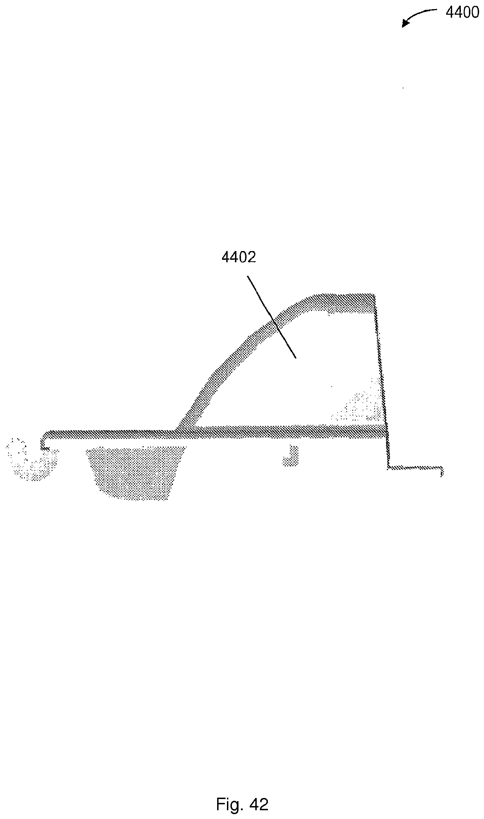

Figure 42 illustrates, generally at 4400, one embodiment of the invention showing the side view of a bay door 4402 which is used to cover the dispensing head spout.

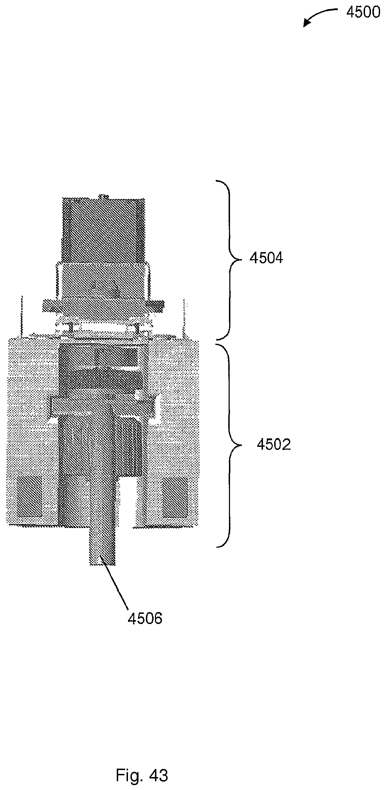

Figure 43 illustrates, generally at 4500, one embodiment of the invention showing a front view of a dispensing head 4502 and an actuator 4504 positioned above the dispending head. At 4506 is the dispensing spout.

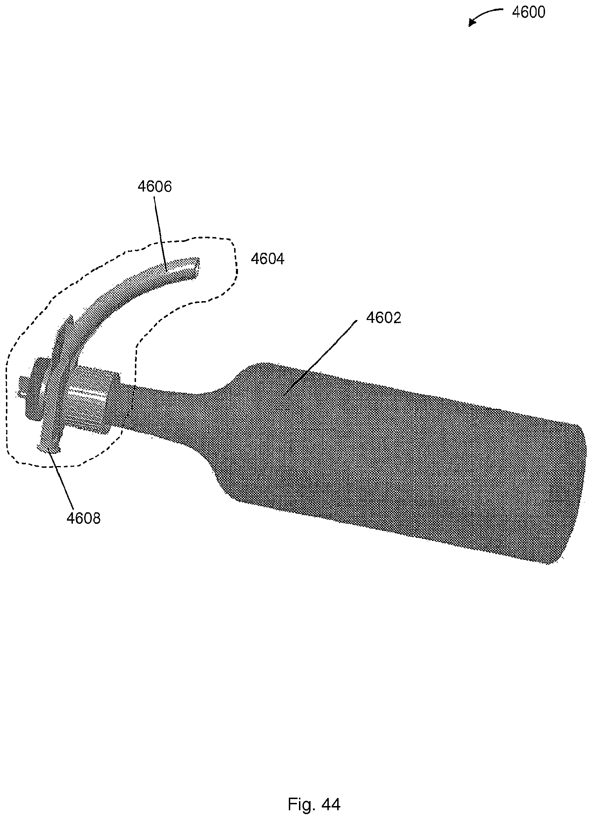

Figure 44 illustrates, generally at 4600, one embodiment of the invention showing a dispensing head 4604 mounted on a bottle. At 4606 is the spout, at 4608 a gas connection.

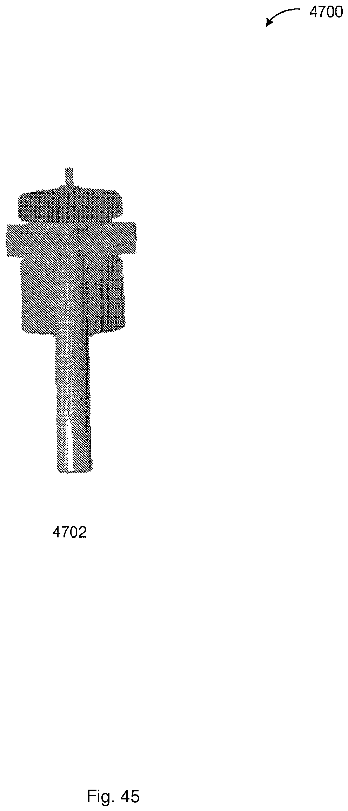

Figure 45 illustrates, generally at 4700, one embodiment of the invention showing a front view of a dispensing head 4702.

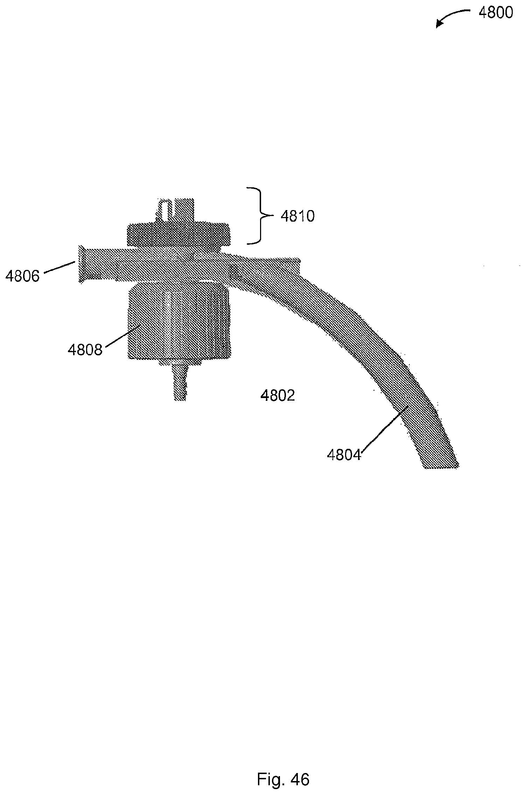

Figure 46 illustrates, generally at 4800, one embodiment of the invention showing a left side view of a dispensing head 4802, showing a nozzle 4804, a gas connection 4806, a cap 4808 for securing the assembly to a bottle, and 4810 delineating a valve assembly.

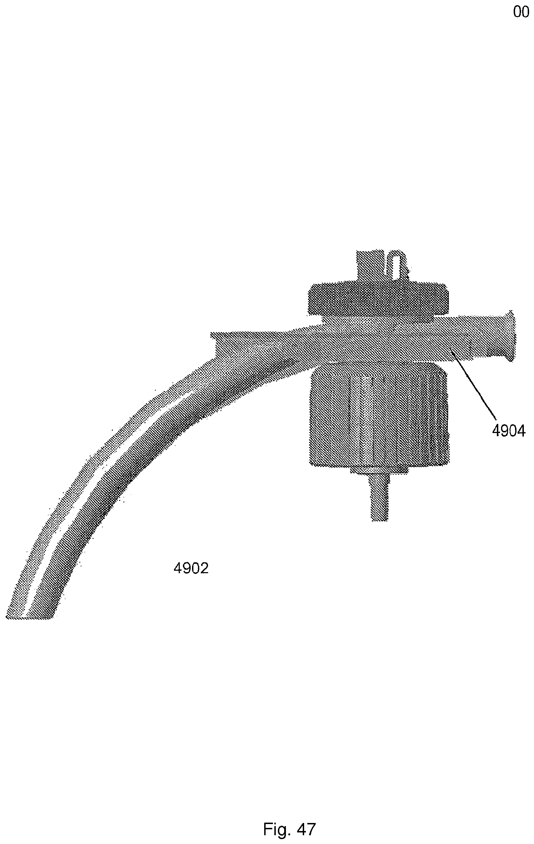

Figure 47 illustrates, generally at 4900, one embodiment of the invention showing a right side view of a dispensing head 4902, and a sensing contact 4904 on the dispensing head 4902. The sensing contact 4904 allows for example for correct insertion into the unit, allows measurement of insertion, allows measurement of the liquid being dispensed, etc.

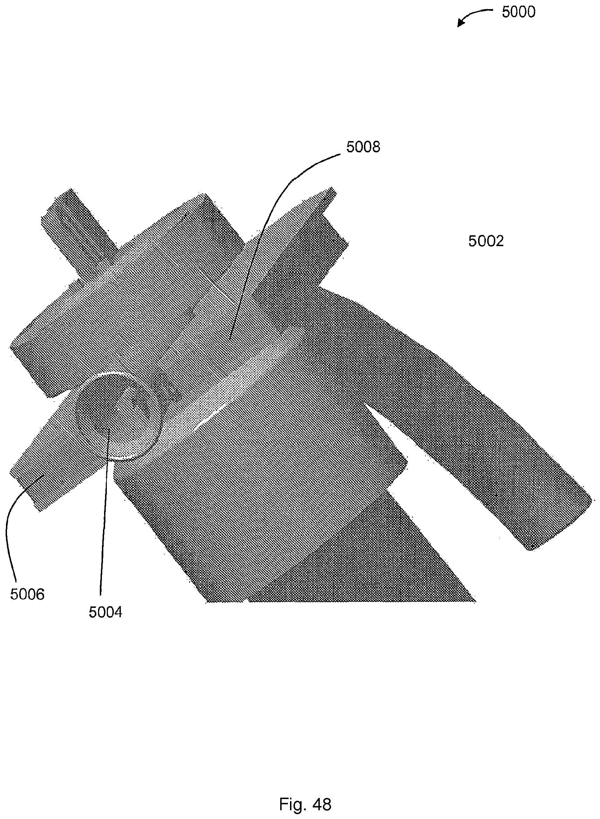

Figure 48 illustrates, generally at 50000, one embodiment of the invention showing a rear view of the dispensing head 5002 showing where a displacing gas inlet is located 5004. Also note the two bands of color or grayscale on either side of the gas inlet opening 5006 and 5008. In one embodiment of the invention these bands 5006, 5008 are in communication with the dispensing station, for example, to indicate when the dispensing head is properly positioned, etc.

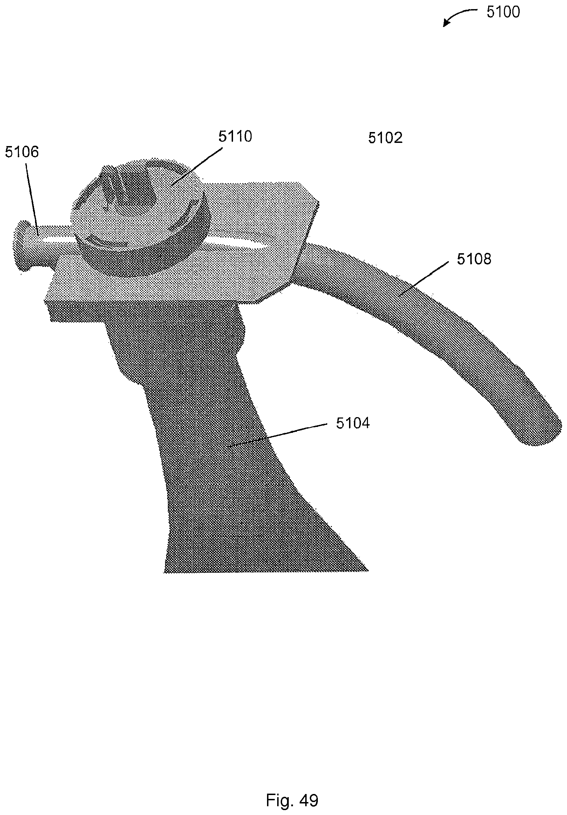

Figure 49 illustrates, generally at 5100, one embodiment of the invention showing the dispensing head 5102 mounted on a bottle 5104, the gas inlet on the left 5106, the pouring spout on the right 5108 and on the top a valve control 5110. Also note a rear view of the dispensing head showing where a displacing gas inlet is located (such as Figure 48).

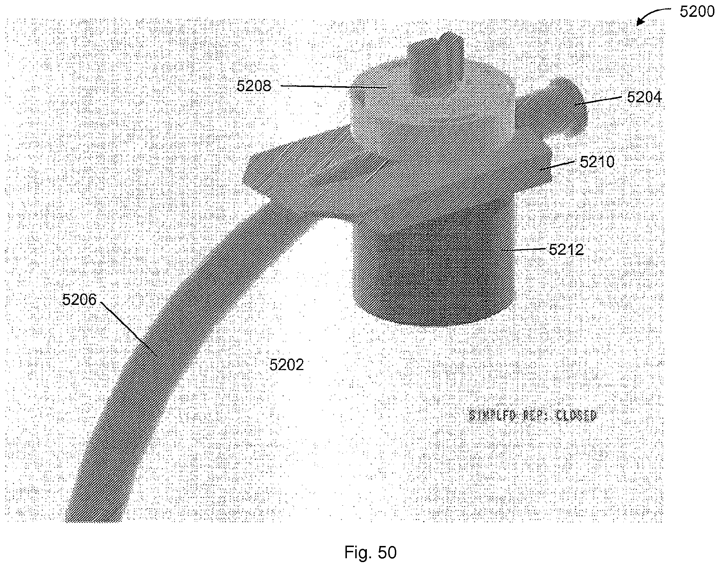

Figure 50 illustrates, generally at 5200, one embodiment of the invention showing the dispensing head 5202 with the gas inlet on the right 5204, the pouring spout on the left 5206, a valve on the top 5208, and a metal band 5210 between the spout 5206 and the bottle cap 5212.

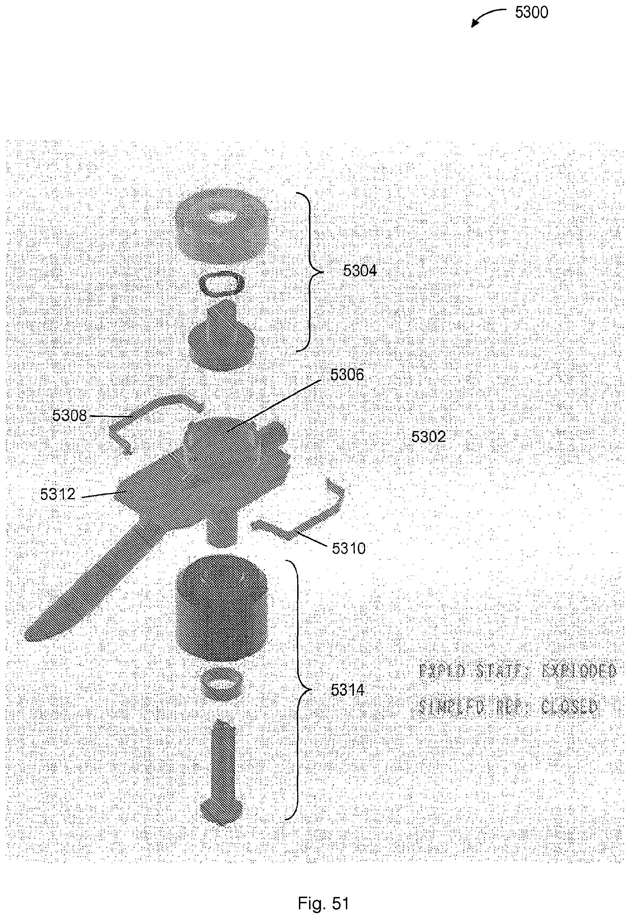

Figure 51 illustrates, generally at 5300, one embodiment of the invention showing the dispensing head in Figure 50 in an exploded view 5302. 5304 is part to the valve assembly that sits within 5306. 5308, 5310 are sensing bands which are secured to the main body 5312. 5314 is the screw cap assembly.

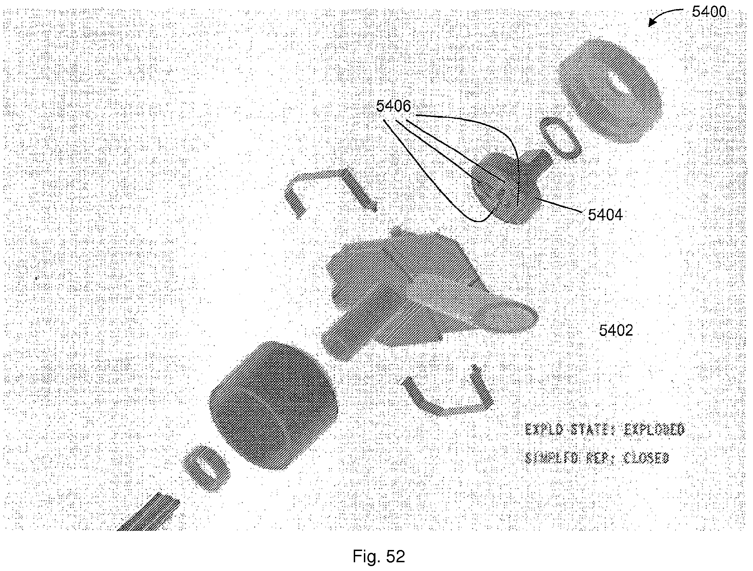

Figure 52 illustrates, generally at 5400, one embodiment of the invention showing the dispensing head in Figure 50 in an exploded view 5402. In this view the channels 5406 in the valve 5404 in the top of the dispensing head 5402 may be seen.

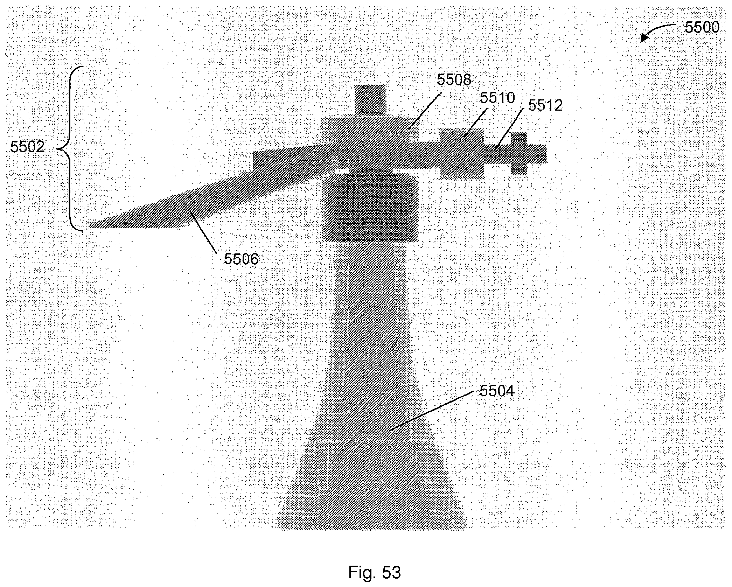

Figure 53 illustrates, generally at 5500, one embodiment of the invention showing the dispensing head 5502 on a bottle 5504 with the spout 5506 to the left, the valve 5508 on top, and the gas inlet 5510 connected to a gas source 5512 on the right. The gas may be any suitable gas for pressuring the bottle such that the liquid will dispense through the spout. In the case of wine where oxidation is to be avoided, a suitable gas may be nitrogen, argon, etc. In one embodiment of the invention, when the bottle is inserted, the gas in the bottle is replaced with the desired gas by purging the gas that was originally in the bottle. Note that in one embodiment of the invention the dispensing head, once mounted on a bottle may remain there even if the bottle is removed from the system. In this way the gas in the bottle may be maintained.

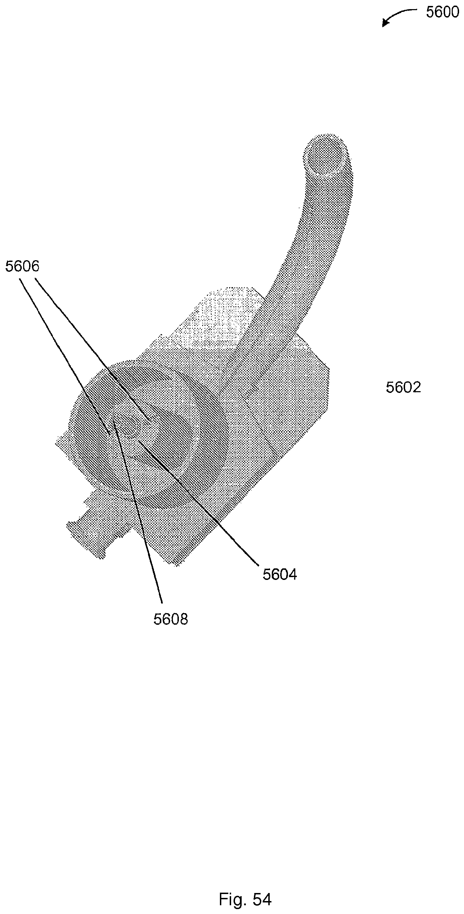

Figure 54 illustrates, generally at 5600, one embodiment of the invention showing the dispensing head 5602 from the view point where a bottle is inserted. Here may be seen the center expanding collar 5604, the gas entry ports 5606, and the liquid exit port 5608.

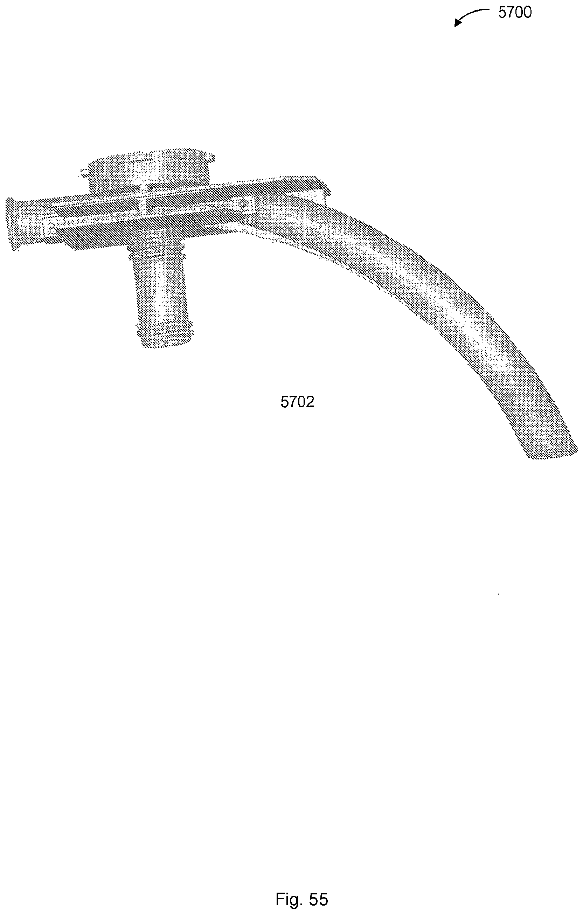

Figure 55 illustrates, generally at 5700, one embodiment of the invention showing the dispensing head 5702 exposed view (e.g. without the screw cap)..

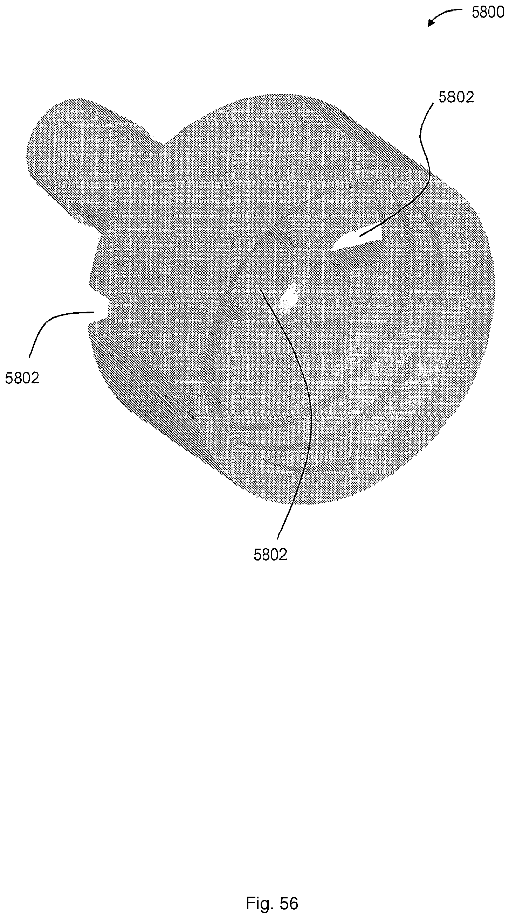

Figure 56 illustrates, generally at 5800, one embodiment of the invention showing the dispensing head exposed gas ports up close 5802.

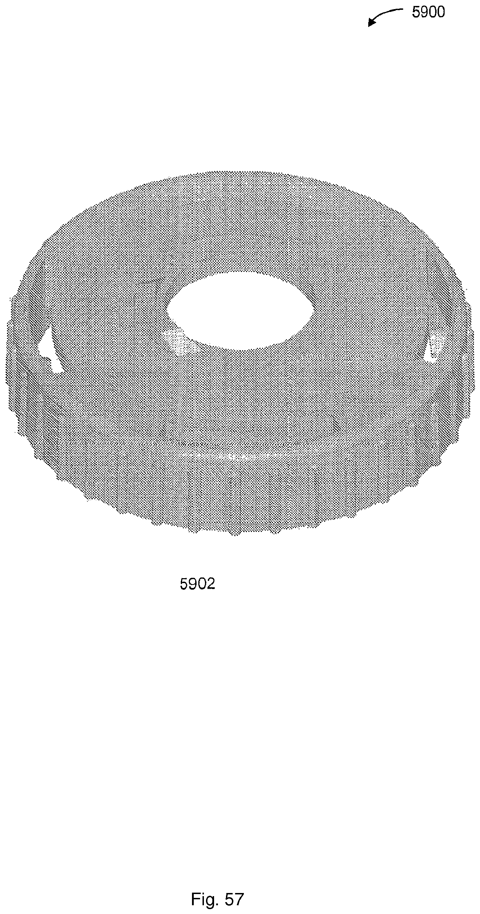

Figure 57 illustrates, generally at 5900, one embodiment of the invention showing the dispensing head top valve part up close 5902.

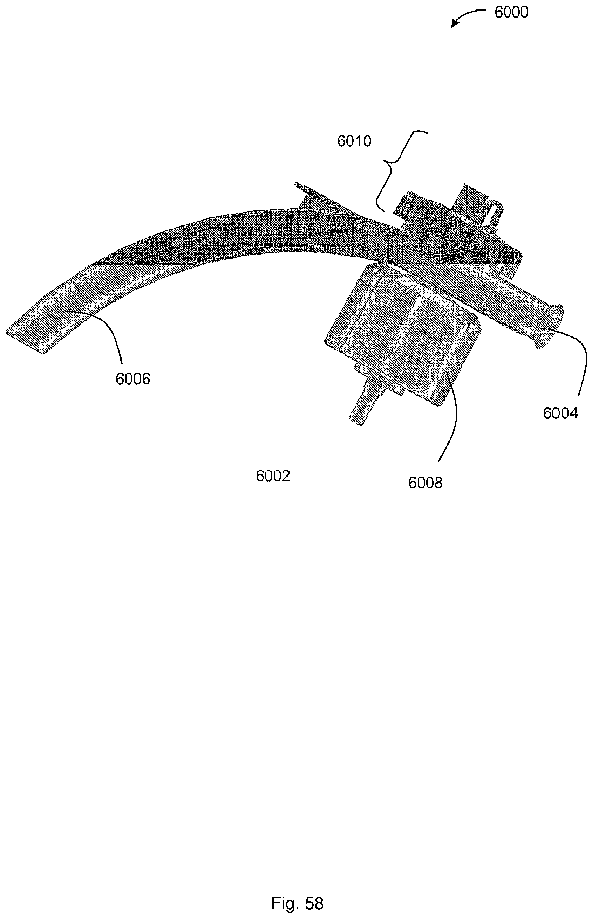

Figure 58 illustrates, generally at 6000, one embodiment of the invention showing the dispensing head 6002 at a different angle, showing the gas inlet port 6004, the spout 6006, the cap assembly 6008, and the valve assembly 6010.

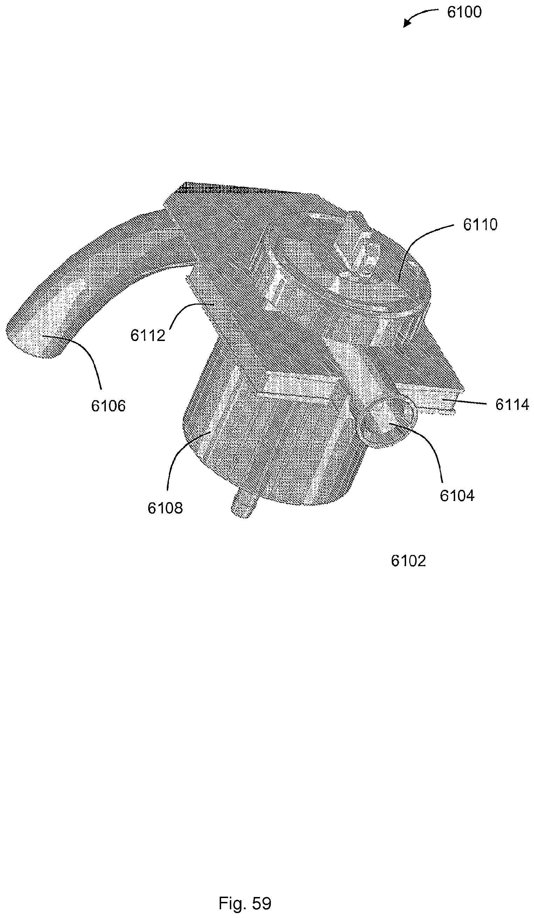

Figure 59 illustrates, generally at 6100, one embodiment of the invention showing the dispensing head 6102 at a different angle, showing the gas inlet port 6104, the spout 6106, the cap assembly 6108, the valve assembly 6110, and sense contact 6112, 6114.

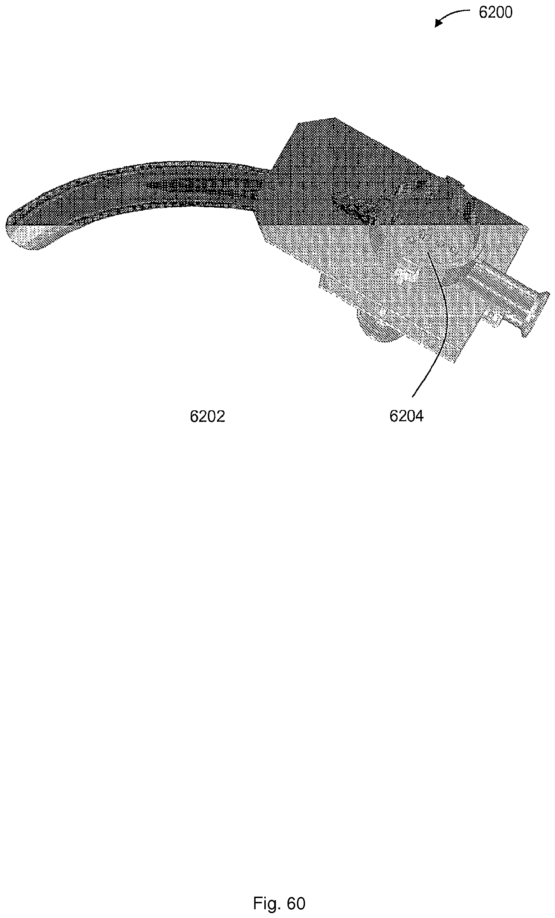

Figure 60 illustrates, generally at 6200, one embodiment of the invention showing the dispensing head 6202 exposed view of the rotor ports (holes in circular region) (near 6204) where the rotor is situated (view without rotor).

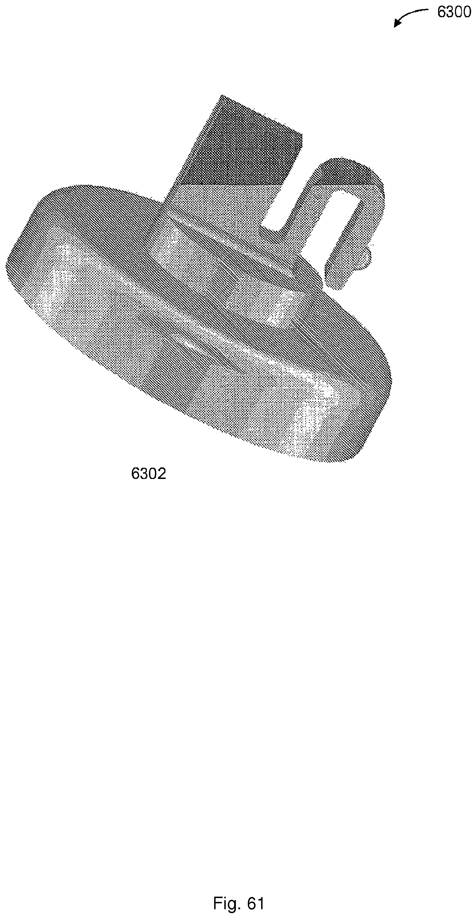

Figure 61 illustrates, generally at 6300, one embodiment of the invention showing the dispensing head rotor top 6302.

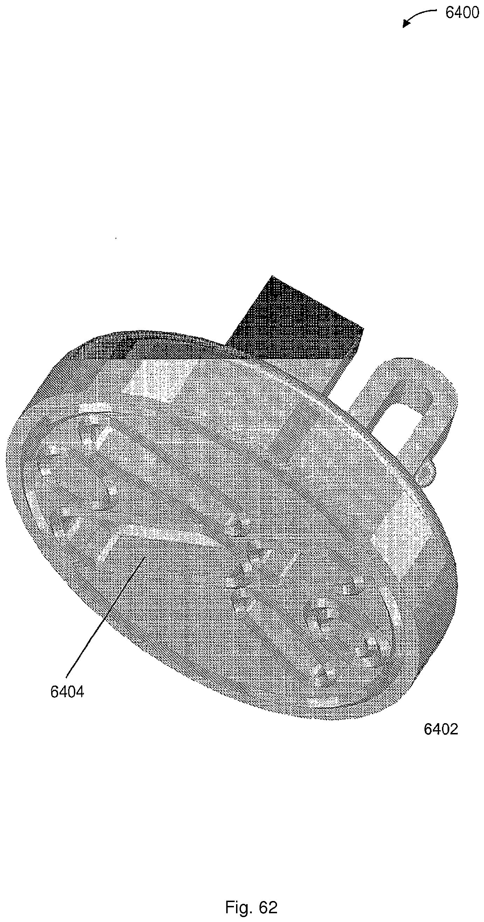

Figure 62 illustrates, generally at 6400, one embodiment of the invention showing the dispensing head rotor 6402 bottom. Here may be seen the channels (example at 6404) which direct and/or control the flow of gases, and liquids.

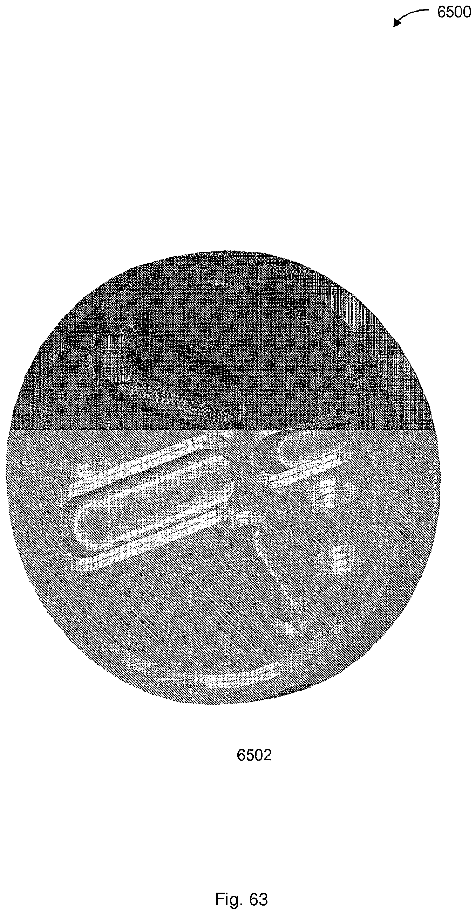

Figure 63 illustrates, generally at 6500, one embodiment of the invention showing the dispensing head rotor 6502 bottom in more detail.

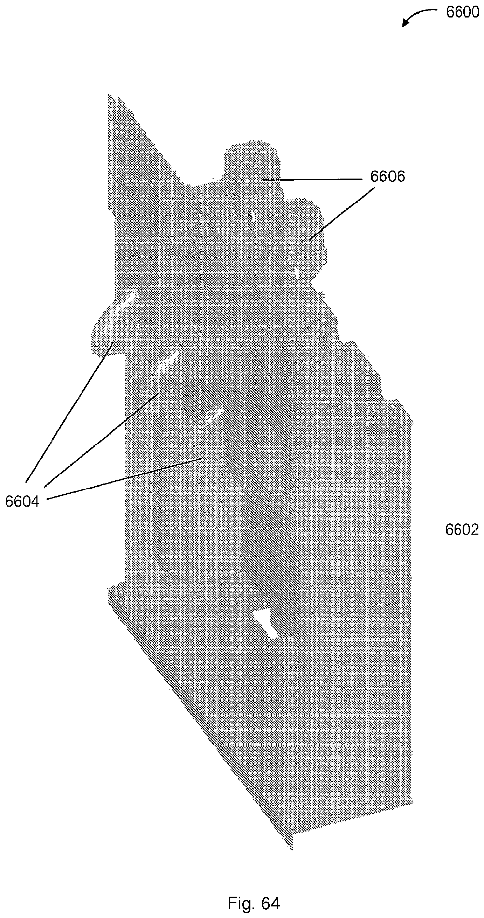

Figure 64 illustrates, generally at 6600, one embodiment of the invention showing the dispensing system 6602 front partially exposed to show the head covers 6604 , motors in the back 6606, etc. The motors 6606 upon bottle insertion engage with the dispensing head valve assembly and allow the valve to be turned as needed under computer control to dispense the liquid in the bottle, puff, etc.

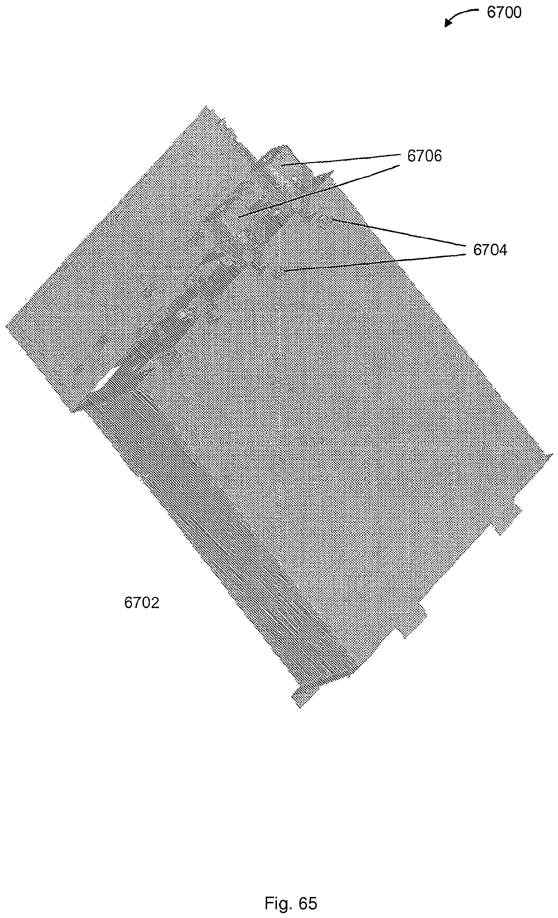

Figure 65 illustrates, generally at 6700, one embodiment of the invention showing the dispensing system back partially exposed to show the gas ports 6704 below the motors 6706, etc.

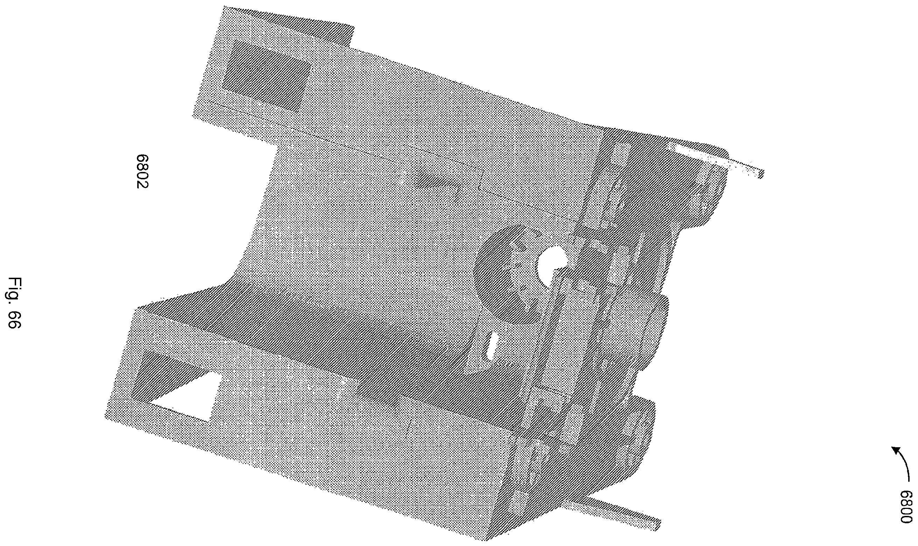

Figure 66 illustrates, generally at 6800, one embodiment of the invention showing the dispensing head "docking" mechanism 6802. The dispending head with the gas port toward the rear would be inserted into this docketing mechanism so that the spout would be facing outward from the page of

In one embodiment of the invention the following features are available basic wine preservation, refrigeration, automated wine preservation, automated pour control wine transaction tracking, customer smartcard control, employee smart card control, unit management, LCD wine identification display, merchandising manager, product/brand management, site location manager, customer marketing manager, inventory manager, distributor/wholesaler manager, disposable delivery, auto-latch security, UPC/barcode database management, wine rating management.

In one embodiment, the present invention provides a way that wine and other liquids can be dispensed at predefined volumes using a preserving gas. It also provides a system for capturing, presenting, managing, and reporting data and information related to dispensing.

In one embodiment of the invention a dispensing head is used to dispense the liquid. In various embodiments of the dispensing head, it may be designed to have the following features and allow the following operation. The dispensing head in one embodiment is the only part that makes contact with the wine or liquid. It is designed as being disposable and hence eliminates the need for cleaning the dispensing unit. The dispensing head once inserted into the Dispensing Unit enables the purging of the initial air that is present in a bottle when it is first opened, by replacing this air with an inert gas such as nitrogen or argon. Once this purging is complete the dispensing head is sealed and prevents air from reentering the bottle. The bottle can then be served in predefined measured volumes by pressing a button on the dispensing unit. The button signals the unit to pour the desired volume by starting the flow of the inert gas into the bottle and displacing the desired liquid into a waiting glass at the dispensing head spout. The dispensing head after it has poured the desired volume into the glass, performs a puff function using the inert gas to clear any liquid that remains in the dispensing head spout into the glass. After the initial purging of the initial air in the bottle the bottle can also be removed at any time from the dispensing unit and be stored for later use due to the dispensing head's ability to prevent air from reentering the bottle, hence preserving the liquid for long periods. The dispensing head also has a built in detection mechanism to ensure that the proper volume is being served. One such way to detect the volume is by detecting the liquid in the dispensing head spout by detecting a current through the liquid as it is pouring. The dispensing head also has a built in mechanism that detects that it is properly positioned in the dispensing head bay. One way this may be accomplished is through electrically detecting the proper positioning of the head in the unit. The dispensing head also has a special mechanism that aligns with the inert gas valve that ensures that it is properly engaged into the dispensing head unit. The dispensing head also has a head locking mechanism built into the rotor and cap portions of the head that prevent a person from accidentally opening the dispensing head and exposing it to the air when the bottle is removed from the dispensing unit. The reason that someone would want to remove a full or partially opened bottle from the dispensing unit is for pre-staging purposes or for the flexibility of changing to offer other wine or liquid dispensing before the entire bottle has been entirely been served.

In one embodiment of the invention an actuation and automated dispensing bay is used. In various embodiments of the actuation and automated dispensing bay, it may be designed to have the following features and allow the following operation. The actuation and automated dispensing bay design of the dispensing system provides a number of features. It provides an unlocking function for the dispensing head's locking mechanism to enable the free rotation of the dispensing head rotor. It provides the detection function for the dispensing head's Alignment mechanism. The Gas Stem provides the gas valve mechanism that engages with the dispensing heads ensuring a proper seal and prevents gas from leaking. The actuation system detects the proper position of the dispensing head's rotor for the pour, puff, and purge functions with the use of a sensor (such as optical). The actuation system uses the sensor and a backup power source (such as a capacitor) to ensure that the dispensing head is closed in the event of a power failure during a pour operation. The automated dispensing bay provides for a quick release mechanism for the dispensing head when the dispensing head bay is opened for bottle removal or insertion. This allows for the protection of the gas from leaking out of the unit.

In one embodiment of the invention electrical and controller functions are used. In various embodiments of the electrical and controller functions, they may be designed to have the following features and allow the following operation. A Gas Transducer and low pressure switch is used to detect inert gas levels and pressures in the gas system and wine bottles. The controller detects gas leakage in the system. It also detects the gas required to dispense the liquid in the bottle and can also detect the amount of liquid volume in the bottle and assures that the volume left in the bottle is properly calculated for dispensing to customers. Door Solenoids are used to automate the opening of the Thermal Door as well as the Gas Door. The opening of the doors is initiated by the insertion of the proper authorized smartcard into the smartcard reader contained in the system enclosure. LCDs are used to display the wine or liquid information for the bottle inserted in a given bay position. The information is pulled from a locally managed SQL database after the UPC code is scanned through the barcode scanner that is mounted in the system enclosure. Control Buttons mounted around the LCDs provide controls for both the customer pouring a liquid into a glass as well as the servicing functions for the dispensing unit. The customer initiates the pouring functions after inserting a valid smartcard. The functions include the selection of the desired volume of the wine or liquid. The servicing functions are only available to authorized smartcards and includes the wine or liquid bottle insertion or removal, the inert gas bottle insertion or removal, temperature setting for the thermal control, as well as the resetting of system functions. The Controller collects and logs every event and action initiated by the customer, the operator, or the system. The Microprocessor of the system interfaces with the Controller subsystem and collects all events and actions of the dispensing system into an SQL database for further reporting and processing. The Controller controls multiple dispensing heads subsystems, controls internal or external inert gas systems, interfaces with barcode scanner, smartcard reader, Thermal Electronic Coupling subsystem, and microprocessors or PCs. Controllers are designed for modularity and multiple controllers can be chained together and can share one microprocessor or PC, one smartcard reader, and one barcode scanner, for central data collection and management. There is no theoretical limit to the number of controllers that may be chained together.

In one embodiment of the invention smartcards, barcodes, and software are used. In various embodiments of the smartcards, barcodes, and software, they may be designed to have the following features and allow the following operation. Smartcard readers using password protected memory cards are used for activating customer pouring functions. Cards can be defined as either credit or debit with limits defined. The software which supports the smartcard functions ensures the proper charging for the different quantities of wine or liquid being purchased. Barcode reader scans the UPC code from the wine or liquid bottle and passes this information to the Application which is running on the Microprocessor or PC. The Software provides the following major functions: a. the interfacing with the Controller providing for data collection and logging for further report generation and data analysis. b. the database definition and management for the wine database which contains both the UPC codes and mapping as well as pricing information from which the wine or liquid pricing is pulled for display on dispensing unit LCDs, the customer database which contains customer account information including customer history, the store or establishment information regarding authorized personnel from which authorized smartcards are validated, the system database which contains all system installation parameters, system events and logs, and customer system preferences. c. the systems management and communications between the embedded microprocessor or PC and the external customer PC to run and manage the installation.

In one embodiment of the present invention provides for an Automated and Intelligent Liquid Dispensing Head and System. The system provides a way that wine and other liquids can be dispensed at predefined volumes using a preserving gas. It also provides a system for capturing, presenting, managing, and reporting data and information related to dispensing.

Thus a method and apparatus for a liquid dispensing head and system have been described.

As used in this description, "one embodiment" or "an embodiment" or similar phrases means that the feature(s) being described are included in at least one embodiment of the invention.

References to "one embodiment" in this description do not necessarily refer to the same embodiment; however, neither are such embodiments mutually exclusive. Nor does "one embodiment" imply that there is but a single embodiment of the invention. For example, a feature, structure, act, etc. described in "one embodiment" may also be included in other embodiments. Thus, the invention may include a variety of combinations and/or integrations of the embodiments described herein.

## Claims

1. A method of dispensing an amount of liquid from a bottle (502-508, 902, 5104), comprising:
mounting a dispensing head (4502, 4800, 5002, 5102, 5302, 5602) on the bottle (502-508, 902, 5104), said dispensing head (4502, 4800, 5002, 5102, 5302, 5602) having a pour spout (4506, 4804, 5108), a valve assembly (4810, 5208, 5304, 5404, 5508, 6010, 6110), and a gas intake (4806, 5106), wherein said pour spout (4506, 4804, 5108) faces outward from said dispensing head (4502, 4800, 5002, 5102, 5302, 5602);
moving said dispensing head (4502, 4800, 5002, 5102, 5302, 5602) into contact with a dispensing system (500, 6602) such that the gas intake (4806, 5106) on said dispensing head (4502, 4800, 5002, 5102, 5302, 5602) is in fluid communication with a gas line on said dispensing system (500, 6602) and such that the valve assembly (4810, 5208, 5304, 5404, 5508, 6010, 6110) of said dispensing head (4502, 4800, 5002, 5102, 5302, 5602) is engaged with a motor (6606, 6706) of the dispensing system (500, 6602);
receiving, at said dispensing system (500, 6602), information relating to the amount of liquid to be dispensed;
rotating said valve assembly (4810, 5208, 5304, 5404, 5508, 6010, 6110) of said dispensing head (4502, 4800, 5002, 5102, 5302, 5602) by said motor (6606, 6706) such that said valve assembly (4810, 5208, 5304, 5404, 5508, 6010, 6110) selectively allows flow from an inert gas source through said gas intake (4806, 5106) allowing inert gas flow into said bottle (502-508, 902, 5104) such that liquid in said bottle (502-508, 902, 5104) is forced into said pour spout (4506, 4804, 5108) or allows inert gas flow from said gas intake (4806, 5106) and out said pour spout (4506, 4804, 5108) to provide a puff purge of said pour spout (4806, 5106) or allows an initial air purge of the initial air that is present in a bottle when it is first opened;
starting an injection of an inert gas into the bottle (502-508, 902, 5104) having the liquid;
stopping said injection when said amount of liquid to be dispensed has exited said bottle (502-508, 902, 5104) through the pour spout (4506, 4804, 5108); and
removing the bottle (502-508, 902, 5104) from the dispensing system (500, 6602), wherein said dispensing head (4502, 4800, 5002, 5102, 5302, 5602) is retained on the bottle (502-508, 902, 5104) and prevents air from entering the bottle (502-508, 902,5104).

2. The method of claim 1, further including electrically sensing when said dispensing head (4502, 4800, 5102, 5302, 5602) is in contact with said dispensing system (500, 6602), and starting an injection of an inert gas into the bottle (502-508, 902, 5104) only when electrically sensing said dispense head (4502, 4800, 5102, 5302, 5602) is in contact with said dispensing system (500, 6602).

3. The method of claim 1, further including a step of clearing liquid from said pour spout (4506, 4804, 5108) with a puff of said inert gas.

4. The method of claim 1, further including a step after moving said dispensing head (4502, 4800, 5102, 5302, 5602) into contact with a dispensing system (500, 6602) but before starting an injection of inert gas into the bottle (502-508, 902, 5104) a step of purging air from said bottle (502-508, 902, 5104), replacing purged air in said bottle (502-508, 902, 5104) with said inert gas.

5. The method of claim 1, wherein receiving at said dispensing system (500, 6602), information relating to the amount of liquid to be dispensed includes having a user select a pour volume at a displayed price.

6. A dispense head for dispensing an amount of liquid from a bottle (502-508, 902, 5104) with the method of any of claims 1 to 5, said dispense head (4502, 4800, 5002, 5102, 5302, 5602) being configured to be mounted and retained on the bottle (502-508, 902, 5104) to prevent air from entering the bottle (502-508, 902, 5104), said dispense head (4502, 4800, 5002, 5102, 5302, 5602) being removable from a liquid dispensing system (500, 6602), the dispense head (4502, 4800, 5002, 5102, 5302, 5602) comprising:
a cap assembly (4808, 5314) configured to be secured to the bottle (502-508, 902, 5104);
a gas intake (4806, 5106);
a pour spout (4506, 4804, 5108) facing outward from said dispense head (4502, 4800, 5002, 5102, 5302, 5602); and
a valve assembly (4810, 5208, 5304, 5404, 5508, 6010, 6110) mounted on said cap assembly (4808, 5314) and in fluid communication with said gas intake (4806, 5106) and pour spout (4506, 4804, 5108), said valve assembly (4810, 5208, 5304, 5404, 5508, 6010, 6110) being engageable with a motor (6606, 6706) of the dispensing system (500, 6602) and being rotatable by the motor (6606, 6706), said valve assembly (4810, 5208, 5304, 5404, 5508, 6010, 6110) configured to selectively allow flow from an inert gas source through said gas intake (4806, 5106) and said cap assembly (4808, 5314) allowing inert gas flow into said bottle (502-508, 902, 5104) such that liquid in said bottle (502-508, 902, 5104) is forced into said pour spout (4506, 4804, 5108) or to allow inert gas flow from said gas intake (4806, 5106) and out said pour spout (4506, 4804, 5108) to provide a puff purge of said pour spout (4506, 4804, 5108) or to allow an initial air purge of the initial air that is present in a bottle when it is first opened.

7. An apparatus for dispensing an amount of liquid from a bottle (502-508, 902, 5104) with the method of any of claims 1 to 5, said apparatus comprising:
a dispense head (4502, 4800, 5002, 5102, 5302, 5602) according to claim 6;
at least one stall (502-508, 906, 2704);
an inert gas source (1606, 5512);
a gas supply port within said at least one stall (502-508, 906, 2704);
a motor (6606, 6706) positioned at said stall (502-508, 906, 2704) to engage the valve assembly (4810, 5208, 5304, 5404, 5508, 6010, 6110) of said dispensing head (4502, 4800, 5002, 5102, 5302, 5602); and
a computer configured to control said motor (6606, 6706) to selectively rotate the valve assembly (1814, 4810, 5110, 5304), said valve assembly (4810, 5208, 5304, 5404, 5508, 6010, 6110) configured to selectively allow flow from the inert gas source (1606, 5512) through said gas intake (4806, 5106) and said cap assembly (4808, 5314) allowing inert gas flow into said bottle (502-508, 902, 5104) such that liquid in said bottle (502-508, 902, 5104) is forced into said pour spout (4506, 4804, 5108) or to allow inert gas flow from said gas intake (4806, 5106) and out said pour spout (4506, 4804, 5108) to provide a puff purge of said pour spout (4806, 5106) or to allow an initial air purge of the initial air that is present in a bottle when it is first opened.

8. The apparatus of claim 7, further including a card reader (910) configured to allow activating pouring functions.

9. The apparatus of claim 7, further comprising a display (502D-508D) above said stall (502-508, 906, 2704).

10. The apparatus of claim 9, further comprising a bar code reader configured to read a bar code on said bottle (502-508, 902, 5104), obtain information related to said bottle (502-508, 902, 5104), and display information on said display (502D-508D).

11. The apparatus of claim 7, further including a means to control temperature in each stall (502-508, 906, 2704).

## Patentansprüche

1. Verfahren zum Ausgeben einer Menge an Flüssigkeit aus einer Flasche (502-508, 902, 5104), das umfasst:
Montieren eines Ausgabekopfs (4502, 4800, 5002, 5102, 5302, 5602) an der Flasche (502-508, 902, 5104), wobei der Ausgabekopf (4502, 4800, 5002, 5102, 5302, 5602) eine Ausgusstülle (4506, 4804, 5108), eine Ventilanordnung (4810, 5208, 5304, 5404, 5508, 6010, 6110) und einen Gaseinlass (4806, 5106) aufweist, wobei die Ausgusstülle (4506, 4804, 5108) vom Ausgabekopf (4502, 4800, 5002, 5102, 5302, 5602) nach außen gewandt ist;
Bewegen des Ausgabekopfs (4502, 4800, 5002, 5102, 5302, 5602) in Kontakt mit einem Ausgabesystem (500, 6602), so dass der Gaseinlass (4806, 5106) am Ausgabekopf (4502, 4800, 5002, 5102, 5302, 5602) mit einer Gasleitung am Ausgabesystem (500, 6602) in Fluidverbindung steht, und so dass die Ventilanordnung (4810, 5208, 5304, 5404, 5508, 6010, 6110) des Ausgabekopfs (4502, 4800, 5002, 5102, 5302, 5602) mit einem Motor (6606, 6706) des Ausgabesystems (500, 6602) in Eingriff kommt;
Empfangen von Informationen in Bezug auf die auszugebende Menge an Flüssigkeit am Ausgabesystem (500, 6602);
Drehen der Ventilanordnung (4810, 5208, 5304, 5404, 5508, 6010, 6110) des Ausgabekopfs (4502, 4800, 5002, 5102, 5302, 5602) durch den Motor (6606, 6706), so dass die Ventilanordnung (4810, 5208, 5304, 5404, 5508, 6010, 6110) selektiv eine Strömung von einer Inertgasquelle durch den Gaseinlass (4806, 5106) ermöglicht, was eine Inertgasströmung in die Flasche (502-508, 902, 5104) ermöglicht, so dass Flüssigkeit in der Flasche (502-508, 902, 5104) in die Ausgusstülle (4506, 4804, 5108) gedrängt wird, oder eine Inertgasströmung vom Gaseinlass (4806, 5106) und aus der Ausgusstülle (4506, 4804, 5108) ermöglicht, um eine Stoßspülung der Ausgusstülle (4806, 5106) bereitzustellen, oder eine Anfangsluftspülung der Anfangsluft ermöglicht, die in einer Flasche vorhanden ist, wenn sie erstmalig geöffnet wird;
Starten einer Einleitung eines Inertgases in die Flasche (502-508, 902, 5104) mit der Flüssigkeit;
Stoppen der Einleitung, wenn die auszugebende Menge an Flüssigkeit die Flasche (502-508, 902, 5104) durch die Ausgusstülle (4506, 4804, 5108) verlassen hat; und
Entfernen der Flasche (502-508, 902, 5104) von dem Ausgabesystem (500, 6602), wobei der Ausgabekopf (4502, 4800, 5002, 5102, 5302, 5602) an der Flasche (502-508, 902, 5104) gehalten wird und verhindert, dass Luft in die Flasche (502-508, 902, 5104) eintritt.

2. Verfahren nach Anspruch 1, das ferner das elektrische Erfassen, wenn der Ausgabekopf (4502, 4800, 5102, 5302, 5602) mit dem Ausgabesystem (500, 6602) in Kontakt steht, und das Starten einer Einleitung eines Inertgases in die Flasche (502-508, 902, 5104) nur dann, wenn elektrisch erfasst wird, dass der Ausgabekopf (4502, 4800, 5102, 5302, 5602) mit dem Ausgabesystem (500, 6602) in Kontakt steht, umfasst.

3. Verfahren nach Anspruch 1, das ferner einen Schritt zum Entleeren von Flüssigkeit aus der Ausgusstülle (4506, 4804, 5108) mit einem Stoß des Inertgases umfasst.

4. Verfahren nach Anspruch 1, das ferner einen Schritt nach dem Bewegen des Ausgabekopfs (4502, 4800, 5102, 5302, 5602) in Kontakt mit einem Ausgabesystem (500, 6602), jedoch vor dem Starten einer Einleitung von Inertgas in die Flasche (502-508, 902, 5104) einen Schritt zum Spülen von Luft aus der Flasche (502-508, 902, 5104) umfasst, wobei gespülte Luft in der Flasche (502-508, 902, 5104) mit dem Inertgas ersetzt wird.

5. Verfahren nach Anspruch 1, wobei das Empfangen von Informationen in Bezug auf die auszugebende Menge an Flüssigkeit an dem Ausgabesystem (500, 6602) umfasst, dass ein Benutzer ein Gießvolumen mit einem angezeigten Preis auswählt.

6. Ausgabekopf zum Ausgeben einer Menge an Flüssigkeit aus einer Flasche (502-508, 902, 5104) mit dem Verfahren nach einem der Ansprüche 1 bis 5, wobei der Ausgabekopf (4502, 4800, 5002, 5102, 5302, 5602) so ausgelegt ist, dass er an der Flasche (502-508, 902, 5104) montiert ist und gehalten wird, um zu verhindern, dass Luft in die Flasche (502-508, 902, 5104) eintritt, wobei der Ausgabekopf (4502, 4800, 5002, 5102, 5302, 5602) von einem Flüssigkeitsausgabesystem (500, 6602) entfernbar ist, wobei der Ausgabekopf (4502, 4800, 5002, 5102, 5302, 5602) umfasst:
eine Kappenanordnung (4808, 5314), die so ausgelegt ist, dass sie an der Flasche (502-508, 902, 5104) befestigt ist;
einen Gaseinlass (4806, 5106);
eine Ausgusstülle (4506, 4804, 5108), die vom Ausgabekopf (4502, 4800, 5002, 5102, 5302, 5602) nach außen gewandt ist; und
eine Ventilanordnung (4810, 5208, 5304, 5404, 5508, 6010, 6110), die an der Kappenanordnung (4808, 5314) montiert ist und mit dem Gaseinlass (4806, 5106) und der Ausgusstülle (4506, 4804, 5108) in Fluidverbindung steht, wobei die Ventilanordnung (4810, 5208, 5304, 5404, 5508, 6010, 6110) mit einem Motor (6606, 6706) des Ausgabesystems (500, 6602) in Eingriff gebracht werden kann und durch den Motor (6606, 6706) drehbar ist, wobei die Ventilanordnung (4810, 5208, 5304, 5404, 5508, 6010, 6110) dazu ausgelegt ist, selektiv eine Strömung von einer Inertgasquelle durch den Gaseinlass (4806, 5106) und die Kappenanordnung (4808, 5314) zu ermöglichen, was eine Inertgasströmung in die Flasche (502-508, 902, 5104) ermöglicht, so dass Flüssigkeit in der Flasche (502-508, 902, 5104) in die Ausgusstülle (4506, 4804, 5108) gedrängt wird, oder eine Inertgasströmung vom Gaseinlass (4806, 5106) und aus der Ausgusstülle (4506, 4804, 5108) zu ermöglichen, um eine Stoßspülung der Ausgusstülle (4506, 4804, 5108) bereitzustellen, oder eine Anfangsluftspülung der Anfangsluft zu ermöglichen, die in einer Flasche vorhanden ist, wenn sie erstmalig geöffnet wird.

7. Vorrichtung zum Ausgeben einer Menge an Flüssigkeit aus einer Flasche (502-508, 902, 5104) mit dem Verfahren nach einem der Ansprüche 1 bis 5, wobei die Vorrichtung umfasst:
einen Ausgabekopf (4502, 4800, 5002, 5102, 5302, 5602) nach Anspruch 6;
mindestens einen Stand (502-508, 906, 2704);
eine Inertgasquelle (1606, 5512);
einen Gaszufuhrkanal innerhalb des mindestens einen Standes (502-508, 906, 2704);
einen Motor (6606, 6706), der am Stand (502-508, 906, 2704) angeordnet ist, um mit der Ventilanordnung (4810, 5208, 5304, 5404, 5508, 6010, 6110) des Ausgabekopfs (4502, 4800, 5002, 5102, 5302, 5602) in Eingriff zu kommen; und
einen Computer, der dazu ausgelegt ist, den Motor (6606, 6706) zu steuern, um selektiv die Ventilanordnung (1814, 4810, 5110, 5304) zu drehen, wobei die Ventilanordnung (4810, 5208, 5304, 5404, 5508, 6010, 6110) dazu ausgelegt ist, selektiv eine Strömung von der Inertgasquelle (1606, 5512) durch den Gaseinlass (4806, 5106) und die Kappenanordnung (4808, 5314) zu ermöglichen, was eine Inertgasströmung in die Flasche (502-508, 902, 5104) ermöglicht, so dass Flüssigkeit in der Flasche (502-508, 902, 5104) in die Ausgusstülle (4506, 4804, 5108) gedrängt wird, oder eine Inertgasströmung vom Gaseinlass (4806, 5106) und aus der Ausgusstülle (4506, 4804, 5108) zu ermöglichen, um eine Stoßspülung der Ausgusstülle (4806, 5106) zu ermöglichen, oder eine Anfangsluftspülung der Anfangsluft zu ermöglichen, die in einer Flasche vorhanden ist, wenn sie erstmalig geöffnet wird.

8. Vorrichtung nach Anspruch 7, die ferner einen Kartenleser (910) umfasst, der dazu ausgelegt ist, die Aktivierung von Gießfunktionen zu ermöglichen.

9. Vorrichtung nach Anspruch 7, die ferner eine Anzeige (502D-508D) über dem Stand (502-508, 906, 2704) umfasst.

10. Vorrichtung nach Anspruch 9, die ferner einen Strichcodeleser umfasst, der dazu ausgelegt ist, einen Strichcode auf der Flasche (502-508, 902, 5104) zu lesen, Informationen in Bezug auf die Flasche (502-508, 902, 5104) zu erhalten und Informationen auf der Anzeige (502D-508D) anzuzeigen.

11. Vorrichtung nach Anspruch 7, die ferner ein Mittel zum Steuern der Temperatur in jedem Stand (502-508, 906, 2704) umfasst.

## Revendications

1. Un procédé de distribution d'une quantité de liquide depuis une bouteille (502-508, 902, 5104), comprenant :
le montage d'une tête de distribution (4502, 4800, 5002, 5102, 5302, 5602) sur la bouteille (502-508, 902, 5104), ladite tête de distribution (4502, 4800, 5002, 5102, 5302, 5602) ayant un bec verseur (4506, 4804, 5108), un ensemble de valve (4810, 5208, 5304, 5404, 5508, 6010, 6110), et une entrée de gaz (4806, 5106), **caractérisé en ce que** ledit bec verseur (4506, 4804, 5108) sort vers l'extérieur depuis ladite tête de distribution (4502, 4800, 5002, 5102, 5302, 5602) ;
le placement de ladite tête de distribution (4502, 4800, 5002, 5102, 5302, 5602) est en contact avec un système de distribution (500, 6602) de manière à ce que l'entrée de gaz (4806, 5106) sur ladite tête de distribution (4502, 4800, 5002, 5102, 5302, 5602) soit en communication fluide avec une ligne de gaz sur ledit système de distribution (500, 6602) et de manière à ce que l'ensemble de valve (4810, 5208, 5304, 5404, 5508, 6010, 6110) de ladite tête de distribution (4502, 4800, 5002, 5102, 5302, 5602) soit en prise avec un moteur (6606, 6706) du système de distribution (500, 6602);
recevant dudit système de distribution (500, 6602), des informations relatives à la quantité de liquide à distribuer ;
la rotation dudit ensemble de valve (4810, 5208, 5304, 5404, 5508, 6010, 6110) de ladite tête de distribution (4502, 4800, 5002, 5102, 5302, 5602) par ledit moteur (6606, 6706) est prévue de manière à ce que l'ensemble de valve (4810, 5208, 5304, 5404, 5508, 6010, 6110) permette de manière sélective un écoulement depuis une source de gaz inerte à travers ladite entrée de gaz (4806, 5106) permettant l'écoulement de gaz inerte dans ladite bouteille(502-508, 902, 5104) de manière à ce que le liquide dans ladite bouteille (502-508, 902, 5104) soit forcé d'aller dans ledit bec verseur (4506, 4804, 5108) ou permette l'écoulement de gaz inerte depuis ladite entrée de gaz (4806, 5106) et hors dudit bec verseur (4506, 4804, 5108) afin de fournir une purge en nuage dudit bec verseur (4806, 5106) ou de permettre une purge d'air initiale de l'air initialement présent dans une bouteille lorsqu'elle est ouverte pour la première fois ;
le début d'une injection d'un gaz inerte dans la bouteille (502-508, 902, 5104) contenant le liquide ;
l'arrêt de ladite injection lorsque ladite quantité de liquide à distribuer a été extraite de la bouteille (502-508, 902, 5104) à travers le bec verseur (4506, 4804, 5108) ; et
le retrait de la bouteille (502-508, 902, 5104) du système de distribution (500, 6602), **caractérisé en ce que** ladite tête de distribution (4502, 4800, 5002, 5102, 5302, 5602) est retenue sur la bouteille (502-508, 902, 5104) et empêche l'air d'entrer dans la bouteille (502-508, 902, 5104).

2. Le procédé de revendication 1, présentant de plus une détection électrique lorsque ladite tête de distribution (4502, 4800, 5102, 5302, 5602) est en contact avec ledit système de distribution (500, 6602), et le début d'une injection d'un gaz inerte dans la bouteille (502-508, 902, 5104) uniquement lors de la détection électrique de ladite tête de distribution (4502, 4800, 5102, 5302, 5602) en contact avec ledit système de distribution (500, 6602).

3. Le procédé de revendication 1, présentant de plus une étape de dégagement du liquide dudit bec verseur (4506, 4804, 5108) à l'aide d'une bouffée dudit gaz inerte.

4. Le procédé de revendication 1, présentant de plus une étape après le placement de ladite tête de distribution (4502, 4800, 5102, 5302, 5602) en contact avec un système de distribution (500, 6602) mais avant le début de l'injection de gaz inerte dans la bouteille (502-508, 902, 5104) une étape de purge d'air de la bouteille (502-508, 902, 5104), remplaçant l'air purgé dans ladite bouteille (502-508, 902, 5104) avec ledit gaz inerte.

5. Le procédé de revendication 1, **caractérisé en ce que** la réception audit système de distribution (500, 6602), des informations relatives à la quantité de liquide à distribuer comprend la sélection par un utilisateur du volume à verser à un prix affiché.

6. Une tête de distribution pour distribuer une quantité de liquide depuis une bouteille (502-508, 902, 5104) avec le procédé selon l'une quelconque des revendications 1 à 5, ladite tête de distribution (4502, 4800, 5002, 5102, 5302, 5602) étant configurée pour être montée et retenue sur la bouteille (502-508, 902, 5104) afin d'empêcher l'air d'entrer dans la bouteille (502-508, 902, 5104), ladite tête de distribution (4502, 4800, 5002, 5102, 5302, 5602) étant amovible depuis un système de distribution de liquide (500, 6602), la tête de distribution (4502, 4800, 5002, 5102, 5302, 5602) comprenant :un ensemble de capuchon (4808, 5314) configuré pour être sécurisé sur la bouteille (502-508, 902, 5104) ;
une entrée de gaz (4806, 5106) ;
un bec verseur (4506, 4804, 5108) sortant vers l'extérieur depuis ladite tête de distribution (4502, 4800, 5002, 5102, 5302, 5602) ; et
un ensemble de valve (4810, 5208, 5304, 5404, 5508, 6010, 6110) monté sur ledit ensemble de capuchon (4808, 5314) et en communication fluide avec ladite entrée de gaz (4806, 5106) et le bec verseur (4506, 4804, 5108), ledit ensemble de valve (4810, 5208, 5304, 5404, 5508, 6010, 6110) pouvant être en prise avec un moteur (6606, 6706) du système de distribution (500, 6602) et pouvant être mise en rotation par le moteur (6606, 6706), ledit ensemble de valve (4810, 5208, 5304, 5404, 5508, 6010, 6110) configuré pour permettre de manière sélective un écoulement depuis une source de gaz inerte à travers ladite entrée de gaz (4806, 5106) et ledit ensemble de capuchon (4808, 5314) permettant un écoulement de gaz inerte dans ladite bouteille (502-508, 902, 5104) de manière à ce que le liquide dans la dite bouteille (502-508, 902, 5104) soit forcé d'aller dans ledit bec verseur (4506, 4804, 5108) ou pour permettre l'écoulement de gaz inerte depuis ladite entrée de gaz (4806, 5106) et hors dudit bec verseur (4506, 4804, 5108) afin de fournir une purge en nuage dudit bec verseur (4506, 4804, 5108) ou pour permettre un purge d'air initiale de l'air initialement présent dans une bouteille lorsqu'elle est ouverte pour la première fois.

7. Un appareil pour distribuer une quantité de liquide depuis une bouteille (502-508, 902, 5104) avec le procédé selon l'une quelconque des revendications 1 à 5, ledit appareil comprenant :
une tête de distribution (4502, 4800, 5002, 5102, 5302, 5602) selon la revendication 6 ;
au moins un compartiment (502-508, 906, 2704) ;
une source de gaz inerte (1606, 5512);
un port d'approvisionnement en gaz au sein d'au moins un compartiment (502-508, 906, 2704);
un moteur (6606, 6706) positionné sur ledit compartiment (502-508, 906, 2704) pour engager ledit ensemble de valve (4810, 5208, 5304, 5404, 5508, 6010, 6110) de ladite tête de distribution (4502, 4800, 5002, 5102, 5302, 5602) ; et
un ordinateur configuré pour contrôler ledit moteur (6606, 6706) pour faire tourner sélectivement l'ensemble de valve (1814, 4810, 5110, 5304), ledit ensemble de valve (4810, 5208, 5304, 5404, 5508, 6010, 6110) configuré pour permettre de manière sélective un écoulement depuis la source de gaz inerte (1606, 5512) à travers ladite entrée de gaz (4806, 5106) et ledit ensemble de capuchon (4808, 5314) permettant l'écoulement de gaz inerte dans ladite bouteille (502-508, 902, 5104) de manière à ce que le liquide dans ladite bouteille (502-508, 902, 5104) soit forcé d'aller dans le bec verseur (4506, 4804, 5108) ou pour permettre l'écoulement de gaz inerte depuis ladite entrée de gaz (4806, 5106) et hors dudit bec verseur (4506, 4804, 5108) afin de fournir une purge un nuage dudit bec verseur (4806, 5106) ou pour permettre un purge d'air initiale de l'air initialement présent dans une bouteille lorsqu'elle est ouverte pour la première fois.

8. L'appareil selon la revendication 7, comprenant de plus un lecteur de carte (910) configuré pour permettre l'activation des fonctions de versement.

9. L'appareil selon la revendication 7, comprenant de plus un affichage (502D-508D) au-dessus dudit compartiment (502-508, 906, 2704).

10. L'appareil selon la revendication 9, comprenant de plus un lecteur de code barre configuré pour lire un code barre sur ladite bouteille (502-508, 902, 5104), obtenir des informations relatives à ladite bouteille (502-508, 902, 5104), et afficher des informations sur ledit affichage (502D-508D).

11. L'appareil selon la revendication 7, comprenant de plus un moyen de contrôle de température dans chaque compartiment (502-508, 906, 2704).
